# EUROPEAN PATENT SPECIFICATION

(11) **EP 4 598 995 B1**
(45) Date of publication and mention of the grant of the patent: **19.08.2026**
(21) Application number: 23783866.9
(22) Date of filing: 04.10.2023
(51) Int. Cl.: C08L 3/02, C08L 67/02, C08L 3/06, C08L 3/08

(54) **THERMOPLASTIC POLYMER BLEND AND USE THEREOF**
THERMOPLASTISCHE POLYMERMISCHUNG UND VERWENDUNG DAVON
MÉLANGE DE POLYMÈRES THERMOPLASTIQUES ET SON UTILISATION

(30) Priority: 06.10.2022 EP 22200064
(43) Date of publication of application: 13.08.2025
(73) Proprietor: BASF SE, 67056 Ludwigshafen am Rhein (DE)
(72) Inventor: LOOS, Robert, 67056 Ludwigshafen am Rhein (DE); EFFEN, Norbert, 67056 Ludwigshafen am Rhein (DE); SINKEL, Carsten, 67056 Ludwigshafen am Rhein (DE); AUFFERMANN, Joerg, 67056 Ludwigshafen am Rhein (DE); SCHLUTT, Nora, 67056 Ludwigshafen am Rhein (DE)
(74) Representative: BASF IP Association
(86) International application number: PCT/EP2023/077463
(87) International publication number: WO 2024/074562

(56) References cited:
- WO-A1-2022/157380
- CN-A- 112 724 472

## Description

The present invention relates to a thermoplastic polymer blend comprising a thermoplastic polyester of the group of aliphatic polyesters and aliphatic-aromatic polyesters and a thermoplastic starch. The invention also relates to a process for preparing such a thermoplastic polymer blend, and a mono-layered or multi-layered film comprising at least one layer made of a thermoplastic polymer blend.

### BACKGROUND ON THE INVENTION

The use of thermoplastic materials such as polystyrene, polyethylene and polyurethane has long been established in many technical areas. However, these conventional thermoplastic materials face an increasing criticism for environmental reasons.

Starch is an important natural polymer that is increasingly being considered as an alternative to conventional plastics due to its biodegradability and other favourable properties for the environment as well as its good availability.

With water and plasticisers such as glycerol, starch can be processed into so-called "thermoplastic starch (TPS)" using conventional polymer processing techniques such as extrusion, injection molding and compression molding. However, materials based on native starch often have poor processibility, mechanical properties and stability. Therefore, modified starches, e.g. hydroxypropyl starch, are used instead of native starch. It is also known to blend native starch with other biodegradable polymers, such as polycaprolactone. Such blends are commercially available, e. g. PLANTIC^{™} HP and Mater-Bi^{®}.

Thermoplastic starches have been known for many years and various processes for their production are described in the literature, for example in U.S. Pat. No. 5,362,777, WO 99/61524, DE 198 24 968 A1, WO 2012/162085 A1 or WO 2006/042364 A1. Thermoplastic starches are prepared from starches by plastifying the starch with a suitable plasticiser, which is typically a polyol.

However, despite the addition of plasticisers, TPS is inherently brittle and hydrophilic. When using TPS, the high demands placed on technical products such as mechanical strength and water resistance, especially in film extrusion, are difficult to be met.

When blending TPS with other thermoplastic polymers, such as polyesters, one faces the problem that the TPS has a very high melt viscosity, whereas the other polymer tends to have a significantly lower melt viscosity. Due to this difference in melt viscosities, a fine dispersion of TPS in a polymer matrix is difficult to achieve and requires efficient blending under high shear. This may lead to mechanical damage of the TPS phase. In addition, the high melt viscosity of the TPS makes processing more difficult, which is reflected in increased torque and pressure conditions in the extruder.

In addition, the compatibility of the hydrophilic TPS and the hydrophobic polymer is limited. This leads to an impairment of the mechanical material properties such as low tensile strength and elongation, as well as to impairments in the appearance of the end product, which in part manifest themselves in reduced transparency and increased opacity. Various publications deal with the above mentioned problems of the starch blend containing TPS, e.g. the problem of opacity when blending TPS with other biopolymer compounds.

WO2022/157380 describes polymer compositions containing 25.5% by weight of a native starch comprising pea starch and 30 to 74.5% by weight of a thermoplastic aliphatic-aromatic Copolyester. The mechanical properties of the blends are not satisfactory.

CN112724472 discloses polymer blends with high starch content containing starch, a starch modifier, a compatibilizer, a plasticizer, a starch modifier and inorganic fillers. The mechanical properties of the blends are not satisfactory.

WO2019138022A1 and WO2020136231A1 describe the production of a hydrophobically modified thermoplastic starch comprising the extrusion of a mixture of a native starch, a polylol, for example sorbitol, an epoxide selected from the group of epoxidized plant oils, and a carboxylic acid, such as citric acid. Also mentioned are blends of the thus obtained hydrophobically modified TPS with conventional polymers such as aliphatic-aromatic polyesters, e. g. poly(butylene adipate-co-terephthalate) (PBAT). The thus obtained blends contain a high amount of the hydrophobically modified starch and thus are quite expensive.

### SUMMARY OF THE INVENTION

Yet, there is still the need to overcome the above-mentioned disadvantages and to improve the properties, especially the mechanical properties of the thermoplastic polymer blends based on combinations of aliphatic or aliphatic-aromatic polyesters and TPS and of the products based thereon. At the same time, the polymer blend should be easily processible into thermoplastic polymer compounds and thermoplastic polymer films, especially in extrusion processing and blown or flat film extrusion

Accordingly, the aim of the present invention is to provide thermoplastic polymer blends based on combinations of aliphatic or aliphatic-aromatic polyesters and TPS, which have good or even improved mechanical properties and confer these properties to the end products. At the same time, the thermoplastic polymer blends should be suitable for efficient processing to thermoplastic polymer compounds and thermoplastic polymer films, especially in extrusion processing and blown or flat film extrusion.

Surprisingly, it was found that blending a combination of a hydrophobically modified TPS and a TPS based on native starch with one or more polyesters from the group of aliphatic and aliphatic-aromatic polyesters results in blends having good or even improved mechanical properties. In particular, the expensive hydrophobically modified TPS can be partly replaced by the less expensive TPS based on native starch. Thus, smaller amounts of hydrophobically modified TPS are required to obtain good product properties. Moreover, the presence of the combination of a hydrophobically modified TPS and a TPS based on native starch allows for producing blends containing considerable amounts of polyhydroxyalkanoates (PHA) without imparting the properties of blown films made therefrom and processing efficiency in the blowing of films.

The present invention therefore relates to a thermoplastic polymer blend comprising
(a) at least one thermoplastic, hydrophobically modified starch as component (a),
(b) at least one thermoplastic native starch as component (b), and
(c) at least one thermoplastic polyester as component (c), which selected from the group consisting of aliphatic polyesters, aliphatic-aromatic polyesters and mixtures thereof.

The present invention is associated with several benefits:
- The thermoplastic polymer blends according to the invention have better mechanical properties compared to known blends based on thermoplastic native starch and polyesters of the group of aliphatic polyesters and aliphatic-aromatic polyesters;
- The thermoplastic polymer blends according to the invention are obtainable by a cost-effective process as only small amounts of the expensive modified starch are required to improve the mechanical properties of the blends;
- The thermoplastic polymer blends according allow for increasing the throughputs in extrusion processing without imparting the mechanics of the obtained products;
- The thermoplastic polymer blends to the invention allow for applying more gentle conditions in the compounding or film production;
- The presence of the combination of a hydrophobically modified TPS and a TPS based on native starch allows for including considerable amounts of polyhydroxyalkanoates such as plant-oil based biodegradable polyesters (PHBH), which otherwise is not possible because of the incompatibility between the hydrophobic polyhydroxyalkanoates and starch.

Therefore, further aspect of the present invention is a process for preparing a thermoplastic blend according to the invention, comprising steps:
(i) providing at least one component (a) or a combination of a hydrophobically modified starch and one or more plasticizer, which is converted at step (iv) into the thermoplastic, hydrophobically modified starch (a);
(ii) providing at least one thermoplastic native starch (b) or a combination of a native starch and one or more plasticizer, which is converted at step (iv) into the thermoplastic native starch (b);
(iii) providing at least one polyester (c) and if necessary, one or more additive (d);
(iv) mixing of the components provided at steps (i) to (iii) to obtain the blend.

The present invention also relates to a mono-layered or multi-layered film comprising at least one layer made of the thermoplastic polymer blend according to the invention.

### DETAILED DESCRIPTION OF THE INVENTION

Here and throughout the specification, the terms "thermoplastic polymer blend", "thermoplastic polymer blend containing TPS" and "starch blend" are used synonymously.

Here and throughout the specification, the terms "thermoplastic starch" and "TPS" refer to the sum of the starch and the plasticizer amount without the water content present in e.g. native starch. Therefore, the relative amount given herein for the thermoplastic starch (TPS) refer to the relative weight of the sum of the weight of the starch and the weight of the plasticizer without the water content present in e.g. native starch.

The term "polyester" also includes polyesteramides, polyetheresters, polyesterurethanes and polyester carbonates, including aliphatic and semiaromatic polyesteramides, aliphatic and semi-aromatic polyetheresters, aliphatic and semiaromatic polyesterurethanes and aliphatic and semiaromatic aliphatic polyester carbonates.

In the context of the present invention, the term "thermoplastic" means that the respective polymer material becomes pliable or moldable at a certain temperature without destruction of the polymer and solidifies below said temperature.

Here and throughout the specification, the terms "wt.-%" and "% by weight" are used synonymously.

Here and throughout the specification, the terms "polylactic acid" and "polylactide" are used synonymously.

The "molecular weight Mn" or the "molar mass Mn" is the number-average molecular weight or molar mass. The "molecular weight Mw" or the "molar mass Mw" is the mass-average molecular weight or molar mass. If not stated otherwise, the Mn and Mw were determined by GPC with an RI (refractive index) detector, using a mixture of hexafluoroisopropanol and 0.05% potassium trifluoroacetate as an eluent (temperature: 40 °C, flow rate: 1 mL/min) and polymethylmethacrylate of defined molecular weight as standards for calibration.

Here and throughout the specification, the melt volume rate (MVR) refers to values determined according to EN ISO 1133 (190°C, 5 kg weight), if not stated otherwise.

Here and throughout the specification, the acid number (AN) is determined according to the following method: Between 0.9 and 1.1 g of the polymer (recorded with a precision of 1 mg) is dissolved in a mixture of 10 mL toluene and 10 mL pyridine. A cooler is added and the mixture is heated under stirring at 50 °C for roughly 1 h. After the addition of 5 mL deionized water the mixture is cooled to room temperature and 50 mL tetrahydrofuran are added through the cooler. The solution is potentiometrically titrated with an ethanolic potassium hydroxide standard solution of known concentration. The blind value is determined at the same procedure but without the polymer.

Here and throughout the specification, any value for the hydroxyl number refers to the values determined according to DIN EN ISO 4629-2, if not stated otherwise.

Here and throughout the specification, the viscosity number (VN) is determined according to DIN 53728-3:1985-1 at 25 °C using a solution of the respective polymer in a 50:50 w/w mixture of phenol and 1,2- dichlorobenzene.

Here and throughout the specification, the glass transition temperature (Tg) is determined by means of dynamic differential calorimetry (DSC) to DIN EN ISO 11357-1:2017-02, if not stated otherwise.

Here and throughout the specification, the terms "melting temperature (Tm)" and "melting point" are used synonymously. Tm is determined by means of dynamic differential calorimetry (DSC) according to DIN EN ISO 11357-3:2018-07, if not stated otherwise.

The residual moisture content was determined by the Karl-Fischer Titration Method B2 from EN ISO 15512:2019 using a Mettler-Toledo InMotion KF PRO Oven Autosampler at 130 °C heating temperature.

In the context of the present invention, the feature "biodegradable" is fulfilled for a substance or a mixture of substances when said substance or the mixture of substances has a percentage degree of biodegradability of at least 90% according to DIN EN 13432. In general, the biodegradability leads to the polymer blend decomposing in an appropriate and detectable timespan. The degradation may take place enzymatically, hydrolytically, oxidatively and/or by the action of electromagnetic radiation, for example UV radiation, and is generally predominantly effected by the action of microorganisms, such as bacteria, yeasts, fungi and algae. The biodegradability can be quantified, for example, by mixing the polymer blend with compost and storing it for a certain time. For example, according to DIN EN 13432, CO₂-free air is allowed to flow through matured compost during the composting and said compost is subjected to a defined temperature program. Here, the biodegradability is defined via the ratio of the nett CO₂ release by the sample (after subtraction of the CO₂ release by the compost without sample) to the maximum CO₂ release by the sample (calculated from the carbon content of the sample) as percentage degree of biodegradability. Biodegradable polymer blends show substantial degradation phenomena, such as fungal growth and formation of cracks and holes, as a rule after only a few days of composting. Other methods for determining the biodegradability are described, for example, in ASTM D 5338 and ASTM D 6400-4.

Throughout the specification, the terms "a mono-layered film" and "a multilayered film" are to be understood as a film comprising only a single layer and a film comprising at least two layers, respectively.

The thermoplastic polymer blend according to the invention comprises at least one thermoplastic, hydrophobically modified starch as component (a) and at least one thermoplastic native starch as component (b).

Here and throughout the specification, the term "starch" refers to both native starch and modified starch. The term "hydrophobic TSP" refers to a thermoplastic, hydrophobically modified starch of the component (a). The term "native TSP" refers to a plastified native starch of the component (b). The term "native starch" refers to any non-modified starch obtained from starch producing plants, such as tuber, cereals or legumes.

The starch used for the production of native TSP and the starch used for the production of hydrophobically modified starch may be any conventional native starch, including starch from tubers, cereals or legumes, for example pea starch, maize starch incl. waxy maize starch, potato starch incl. waxy potato starch, amaranth starch, rice starch incl. waxy rice starch, wheat starch incl. waxy wheat starch, barley starch incl. waxy barley starch, tapioca starch incl. waxy tapioca starch, and sago starch. Starches generally have an amylose content of 20 to 30% by weight, depending on the plant species from which they are obtained. Particularly, starches rich in amylopectin, which have a significantly increased amylopectin content, or products containing an increased amylose content, also belong to this category. In addition to the natural starch types rich in amylopectin and high amylose types obtained by breeding measures, also starches rich in amylopectin or high amylose starches obtained by chemical and/or physical fractionation or produced by genetically modified plants may be used.

The native starch as well as the hydrophobically modified starch can be processed into so-called "thermoplastic starch (TPS)", i. e. into native TPS and hydrophobic TPS, respectively by treating it with a plasticizer by conventional polymer processing techniques such as extrusion, injection molding and compression molding.

The literature describes numerous low-molecular-weight and relatively high-molecular-weight compounds as plasticizers for starch. Suitable examples of plasticizers include, but are not limited to water and polyols, and also mixtures thereof. Preference is given to polyols selected from the group consisting of glycerol, sorbitol, sorbitol esters, oligomerized glycerol, pentaerythritol, erythritol, xylitol, mannitol and mixtures thereof. Particular preference is given to glycerol, sorbitol, and oligomerized glycerol (oligoglycerol), erythritol and mixtures thereof.

Suitable oligoglycerols, which can be used as plasticizers, are described in WO 2012/017095 and WO 2017/153431. In particular, in order very substantially to avoid evaporation of the monoglycerol during subsequent film extrusion, the monoglycerol content of the oligoglycerol is preferably below 10% by weight, based on the total weight of the oligoglycerol.

Sorbitol is particularly preferred as plasticizer for both native starch and hydrophobically modified starch, and preference is in particular given to an aqueous sorbitol solution whose sorbitol content is generally 40 to 80% by weight, in particular 45 to 75% by weight and especially 50 to 70% by weight, based on the total weight of the aqueous sorbitol solution.

A mixture used for the production of the thermoplastic starch generally comprises 5 to 30% by weight, preferably 10 to 26% by weight, especially 18 to 26% by weight, based on the total weight of the mixture, of a plasticiser.

Preferably, the mixture for the production of the thermoplastic starch contains sorbitol or erythritol as a plasticizer in a quantity of 10 to 15% by weight, based on the total weight of the mixture of plasticizer and starch.

According to the invention, the component (a) is a thermoplastic, hydrophobically modified starch. Modified starches may also be termed "functionalised starch" or "derivatised starch". In the context of the present invention, the terms "functionalization", "derivatization" and "modification" of starch are used synonymously.

Hydrophobic modified starches and also hydrophobic TSP are known in the art for long time, e. g. from G. Tegge, Stärke und Stärkederivate (Starch and Starch derivatives), 3rd ed. B. Behr's Verlag GmbH&Co. KG, Hamburg, 2004, pp. 189-214 and are commercially available e. g. from Roquette, Cargill, Ingredion, Avebe, Archer Daniel Midlands, Emsland Group or Agrana.

In the the hydrophobically modified starch at least some of the hydroxyl groups of the starch are modified by hydrophobic groups, i. e. the hydroxyl groups are converted into aprotic groups su-ich as ester or ether groups or carbamate groups. Thus, hydrophobically modified starch derivatives are divided into starch esters and starch ethers.

In a hydrophobically modified starch typically at least 0.0025 mol, in particular at least 0.01 mol, e.g. 0.0025 to 0.25 mol, in particular 0.01 to 0.1 mol of the hydroxyl groups of the anhydroglucose units of the starch are modified on average. This corresponds to a degree of substitution DS of at least 0.01, in particular at least 0.04, e.g. 0.01 to 1, in particular 0.04 to 0.4. The DS means the average amount of modified anhydroglucose units of the starch. The term "modified" means that the hydrogen atom of the hydroxyl group is replaced by a radical which imparts hydrophobic properties to the starch. The radical which imparts hydrophobic properties to the starch, hereinafter hydrophobic radical, is typically a saturated hydrocarbon radical, such as alkyl, alkenyl or cycloalkyl having 1 to 40 carbon atoms, in particular 2 to 30 carbon atoms, especially 5 to 30 carbon atoms, an aromatic hydrocarbon group having 1 to 40 carbon atoms, in particular 2 to 30 carbon atoms, especially 5 to 30 carbon atoms or a trialkyl silane group. The hydrophobic radical may be attached to the oxygen atom of the modified hydroxyl group either directly or via a linker, such as a carbonyl group, a carbamide group, a hydroxyalkyl group or a carboxyalkyl group. The hydrocarbon group may carry 1 or 2 hydroxyl groups or 1 or 6 ether groups or 1, 2 or 3 carboxyester groups, provided that the total number of carbon atoms exceeds the total number of hydroxyl groups, carboxyester groups and ether groups.

The total amount of hydrophobic radicals in the starch is typically in the range of 0.1 to 20% by weight, in particular in the range of 0.5 to 10% by weight, based on the total weight of the hydrophobically modified starch.

Preferably, the modified OH group is present as an ester or ether group or as a carbamate group, where the hydrogen atom of the OH group is replaced by the hydrophobic radical defined above. Frequently, the hydrophobically modified starch is non-ionic, i. e. the radical which replaces the hydrogen atom of the OH group of the starch does not bear any ionic group or a group which is capable of forming a ionic group, such as an acid group or a basic group. In other words, the hydrogen atoms of the modified OH groups of the starch are replaced by a non-ionic group. In some cases, the radical may carry a carboxyl group provided that the total number of carbon atoms the radical is at least 5, e. g. from 5 to 40.

The modification of the hydroxyl groups in the non-modified starch is achieved by reacting a non-modified starch with a reagent that is capable of forming a bond to the oxygen atom of the hydroxyl groups of the starch and which carries a hydrophobic radical as described above. This reagent is also termed "hydrophobizing agent". The methods for a hydrophobic modification are known to a skilled person and may be carried out in slurry, paste, (semi-)dry method, by means of reactive extrusion as well as in organic solvents.

The non-modified starch used for preparing the hydrophobically modified starch may be any native starch as described above. However, the non-modified starch used for preparing the hydrophobically modified starch may also be a degraded native starch. The degradation processes may be hydrolytic (acid-catalysed), oxidative, mechanical, thermal, thermochemical or enzymatic. In this way, the starch may not only be structurally changed, but the starch products may also be made soluble or swellable in cold water.

The hydrophobic modified starches are frequently prepared by esterification or etherification of a non-modified starch.

For an esterification, the non-modified starch is reacted with a carboxylic acid or an ester-forming deriviative thereof, such as an anhydride and acid chloride or a carboxylic acid ester, such a methyl or ethyl ester, or a diketene. Mixed esters or anhydrides may also be used. Suitable esterification agents are in particular monocarboxylic acids of the formula RCOOH, ester forming derivatives thereof and the cyclic anhydrides dicarboxylic acids carrying a radical R, where R may be an alkyl, aryl, alkenyl, alkaryl or aralkyl group with 1 to 30 carbon atoms, in particular 1 to 20 carbon atoms, especially with 1 to 12 carbon atoms.

Etherifications are typically carried out by reaction of the non-modified starch with suitable alkylation agents, including
- alkylene oxides, in particular alkyleneoxides containing 2 to 20 carbon atoms, preferably 2 to 6 carbon atoms, in particular 2 to 4 carbon atoms, such as ethylene oxide, propylene oxide, butylene oxide or styrene oxide;
- glycidyl ethers, such as alkyl glycidyl ethers, cycloalkyl glycidyl ethers, arylglycidyl ethers and alkyl substituted arylglycidyl ethers, e. g. o-cresyl glycidyl ethers, poly(propylene glycol) diglycidyl ethers, tert-butylphenyl glycidyl ethers, ethylhexyl glycidyl ethers and hexanediol mono- and -diglycidyl ethers;
- glycidyl esters, such as alkyl glycidyl esters, arylglycidyl esters and alkyl substituted arylglycidyl esters, e. g. glycidyl esters of C₂-C₂₀ alkanoic acids of C₂-C₂₀ alkanoic acids or C₅-C₂₀ cycloalkanoic, such as the glycidyl ester of neodecanoic acid or the glycidyl ester of of cyclohexanoic acid and the glycidyl ester of of benzoic acid;
- alkyl halides, such as methyl chloride and ethyl chloride;
- dialkyl carbonates, such as dimethyl carbonate and diethyl carbonate;
- dialkylsulfates, such as dimethyl sulfate and diethyl sulfate;
- epoxidized vegetable oils, such as epoxidized soybean oil, epoxidized sunflower oil, epoxidized rapeseed oil, epoxidized linseed oil and mixtures thereof; and
- trialkyl silanes, such as trimethyl silane.

In one group of preferred embodiments (1), the hydrophobic TSP of component (a) is based on a hydrophobically modified starch which has been reacted with an epoxide, which is in particular selected from the group consisting of alkyl glycidyl ethers, arylglycidyl ethers, alkyl substituted arylglycidyl ethers, arylglycidyl esters, alkyl substituted arylglycidyl esters, alkylglycidyl ethers, alkylglycidyl esters, cycloalkyl glycidyl esters as defined above and epoxidized vegetable oils and combinations thereof.

In a very preferred subgroup (1a) of group (1) of embodiments, the hydrophobic TSP of component (a) is based on a starch which has been hydrophobically modified with one or more epoxidized vegetable oils. Suitable examples of the epoxidized vegetable oils of group (1a) include, but are not limited to epoxidized soybean oil, epoxidized sunflower oil, epoxidized rapeseed oil, epoxidized linseed oil and mixtures thereof.

Suitable examples of the epoxidized vegetable oils of group (1) include in particular epoxidized soybean oil (ESBO) and epoxidized linseed oil (ELO). Epoxidized linseed oil has frequently a viscosity of approximately 900 mPas at 25 °C and an epoxide oxygen content of at least 8.5% by weight, based on the total weight of the oil. Epoxidized soybean oil has frequently a viscosity of approximately 300-450 mPas (also at 25 °C) and an epoxide oxygen content of 6.5-7.5% by weight, based on the total weight of the oil. The viscosity measurements carried out for the purpose of the present invention were each carried out in a viscometer according to EN ISO 3219.

The amount of epoxidized vegetable oil is in particular in the range of 0.1 to 6% by weight, preferably in the range of 1 to 4.5% by weight, particularly preferably in the range of 2.5 to 3.5% by weight, based on the total weight of the non-modified starch and the epoxidized vegetable oil.

Hydrophobic modified starches and also hydrophobic TSP of group (1a) of embodiments are known from WO 2019/138022 and from WO 2020136231 and are commercially available, e. g. from Agrana Stärke GmbH, Austria.

In another preferred group of embodiments (2), the hydrophobic TSP of component (a) is based on a starch which has been hydrophobically modified with ethers. In the context of the invention, the ethers of this group (2) are in particular other than the ethers containing epoxid groups as mentioned above in group (1).

Suitable examples of the ethers include, but are not limited to alkyl ethers such as methyl, ethyl ethers; hydroxalkyl ethers such aus hydroxyethyl, hydroxypropyl, hydroxybutyl ethers; cyanoalkyl ethers such as cyanoethyl ether; carbamoylalkyl ethers such as carbamoylethyl ether; and alkylene oxides containing 1 to 20 carbon atoms (C₁-C₂₀-alkylene oxides), preferably 2 to 6 carbon atoms (C₂-C₆-alkylene oxides), in particular 2 to 4 carbon atoms (C₂-C₄-alkylene oxides), especially ethylene oxide and propylene oxide. The alkyl chain length of the alkyl ethers of group (2) is typically in the range of 1 to 20 carbon atoms, in particular in the range of 1 to 10 carbon atoms, especially in the range of 1 to 5 carbon atoms.

In another preferred group of embodiments (3), the hydrophobic TSP of component (a) is based on a starch which has been hydrophobically modified with ester groups. The ester groups are typically derived from monocarboxylic acids of the formula RCOOH, where R may be an alkyl, aryl, alkenyl, alkaryl or aralkyl group with 1 to 30 carbon atoms, in particular 1 to 20 carbon atoms, especially with 1 to 12 carbon atoms, or from the cyclic anhydrides of dicarboxylic acids, such as succinic acid anhydride or glutaric anhydride, where the cyclic anhydride carries a radical R as defined herein. Examples of the esters of group (3) include, but are not limited to
- esters of the starch with monocarboxylic acids having 1 to 20 carbon atoms (C₁-C₂₀-carboxylic acid), in particular 1 to 18 carbon atoms (C₁-C₁₈-carboxylic acids), in particular with alkyl, aryl, alkenyl, alkylaryl or aralkyl carboxylic acids wherein the alkyl, aryl, alkenyl, alkylaryl or aralkyl group thereof has 1 to 19 carbon atoms, in particular 1 to 17 carbon atoms, examples being acetic acid, propionic acid, butyric acid, oleic acid, stearic acid, and benzoic acid
- esters of the starch with at least one anhydride of an alkyl or alkenyl substituted dicarboxylic acid, in particular a alkyl or alkenyl substituted C₄-C₈ dicarboxylic acid anhydride, such as alkyl substituted succinic acid anhydride and alkenyl substituted succinic acid anhydride. In this alkyl or alkenyl substituted dicarboxylic acid anhydrides the alkyl and alkenyl groups have usually 1 to 19 or 2 to 19 carbon atoms, in particular 2 to 17 carbon atoms. Examples are octenyl succinic anhydride.

In a very preferred subgroup (3a) of group (3) of embodiments, the hydrophobic TSP of component (a) is based on a starch which has been hydrophobically modified with one or more fatty acids or ester forming derivatives thereof, such as acid chlorides. Suitable fatty acids may be of vegetable or animal origin and include in particular C₁₂-C₂₀ fatty acids, which may be saturated or unsaturated.

In a further very preferred subgroup (3a) of group (3) of embodiments, the hydrophobic TSP of component (a) is based on a starch which has been hydrophobically modified with one or more alkenyl substituted dicarboxylic acid anhydrides, in particular with an alkyl or alkenyl substituted C₄-C₈ dicarboxylic acid anhydride, such as alkyl substituted succinic acid anhydride and alkenyl substituted succinic acid anhydride as described above.

In another preferred group of embodiments (4), the hydrophobic TSP of component (a) is based on a starch which has been hydrophobically modified with isocyanates. The thus modified starches will bear urethane groups, where the nitrogen atom is substituted with a hydrocarbon radical having 1 to 40 carbon atoms, in particular 2 to 20 carbon atoms. Typically, the isocyanate is of the formula R-NCO, where R may be an alkyl, aryl, alkenyl, alkaryl or aralkyl group with 1 to 30 carbon atoms, in particular 1 to 20 carbon atoms, especially with 1 to 12 carbon atoms

In another preferred group of embodiments (5), the hydrophobic TSP of component (a) is based on a starch which has been hydrophobically modified with C₂-C₄-alkylene oxides. In the context of the invention, the C₁-C₄-alkylene oxides of group (5) are other than those of group (1). Suitable examples of the C₂-C₄-alkylene oxides of group (5) include, but are not limited to alkylene oxides having 2 to 4 carbon atoms. Preferred are ethylene oxide, propylene oxide and butylene oxide, particularly preferred are ethylene oxide and propylene oxide, especially preferred is propylene oxide. Various amounts of the C₁-C₄-alkylene oxides of group (5) can be used depending on the desired properties and economy. In general, an amount of 15% by weight or less, preferably 1 to15% by weight, more preferably 10% by weight or less, particularly preferably 1 to10% by weight, based on the weight of the starch, of the C₁-C₄-alkylene oxides of group (5) are used.

The hydrophobically modified starch is prepared by reacting the non-modified starch and at least one hydrophobizing reagents selected from the groups (1) to (5), preferably from the groups (1) to (3), (3a), (3b) and (1a), more preferably from the groups (1a), (3a) and (3b). The reaction is typically carried out at elevated temperature, e. g. in the range of 50 to 200°C, in particular in the range of 80 to 180°C. The reaction of the non-modified starch with the hydrophobizing reagent may be promoted by use of an acidic catalyst, in particular, if the hydrophobizing agent is an epoxide. In this case, the pH of the reaction mixture containing the starch, the hydrophobizing reagent and optionally a diluent, e. g. a plasticizer is preferably adjusted to a pH of less than about 7 by the addition of an organic or inorganic acid such as hydrochloric acid, citric acid or sulfuric acid. The reaction may be carried out in an inert diluent or in substance. The modification may be carried out with a thermoplastic starch, i. e. a plasticized starch, or with a non-plasticized starch. In particular, it may be beneficial to carry out the modification of the non-modified starch and the plastification to produce the hydrophobic TSP in a single step as described e. g. in WO 2019/138022.

Especially, component (a) comprises one or more plasticizer selected from the group consisting of glycerol, sorbitol, sorbitol esters, oligomerized glycerol, pentaerythritol, erythritol, xylitol, mannitol and mixtures thereof, in particular selected from the group consisting of glycerol, sorbitol, oligomerized glycerol (oligoglycerol), erythritol and mixtures thereof.

Component (a) is preferably produced by a method, wherein a mixture of a non-modified starch, in particular a native starch, a polyol, preferably selected from the group comprising polyethylene glycol, mono- and disaccharides, sugar alcohols such as glycerol, sorbitol, erythritol, xylitol or mannitol and mixtures thereof, in an amount of from 10 to 25% by weight, preferably 10 to 15% by weight, especially 13 to 15% by weight, based on the total weight of the mixture, and of an epoxide of group (1a), in an amount of 0.1 to 6% by weight, preferably 1 to 4.5% by weight, particularly preferably 2.5 to 3.5% by weight, based on the total weight of the mixture, is reacted, in particular at a temperature of at least 50°C, in particular at least 80°C, e. g. in the range of 50 to 200°C, in particular in the range of 80 to 180°C.

The amount of the component (a) in the blend is frequently in the range of 0.1 to 35% by weight, e.g. in the range of 1 to 35% by eight, preferably in the range of 2 to 30% by weight, especially in the range of 5 to 25% by weight, based on the total weight of the blend in anhydrous form, calculated as the anhydrous form of component (a).

Here and in the following, the term "in anhydrous form" is understood in the context of the weight of the components (a) and (b) and the weight of the blend that the amounts given for components (a) and (b) are calculated without any plasticizer (water and organic plasticizer) and thus refer to the amount of starch or hydrophobically modified starch without water and organic plasticizer and the weight of the blend is the weight of the ingredients other than water and organic plasticizer.

The component (a) has usually a number average molecular weight (Mn) in the range from 5000 to 500000 g/mol, in particular in the range from 10000 to 300000 g/mol. The weight-average molecular weight (Mw) of component (a) is typically in the range of 50000 to 2000000 g/mol, preferably from 100000 to 1000000 g/mol.

The blend of the invention further contains a thermoplastic native starch as component (b).

Principally any native starch described above can be used for producing the thermoplastic native starch. Preferably, the native TSP of component (b) is a plastified starch selected from corn starch, potato starch, wheat starch, pea starch or rice starch or a mixture thereof. Especially, the native TSP of component (b) is a plastified starch selected from wheat starch, corn starch and potato starch and mixtures thereof, and with particular preference corn starch or potato starch and mixtures thereof.

Like component (a), component (b) can be produced by processing a native starch into a thermoplastic native starch with a plasticizer using conventional polymer processing techniques as described above. Suitable examples of plasticizers include, but are not limited to water and polyols, and also mixtures thereof. Particularly, polyols are used as plasticizer for native starch. Suitable polyols for producing component (b) include, but are not limited to glycerol, sorbitol, sorbitol esters, oligomerized glycerol, pentaerythritol, erythritol, xylitol, mannitol and mixtures thereof and particular preference is given to glycerol, sorbitol, oligomerized glycerol (oligoglycerol), erythritol and mixtures thereof.

Sorbitol is particularly preferred also for native starch as plasticizer, and preference is in particular given here to an aqueous sorbitol solution whose sorbitol content is generally 40 to 80% by weight, in particular 45 to 75% by weight and especially 50 to 70% by weight, based on the total weight of the aqueous sorbitol solution. An aqueous sorbitol solution that is particularly preferred as plasticizer for native starch is also as described above.

A mixture used for the production of the thermoplastic native starch generally comprises 10 to 30% by weight, preferably 15 to 26% by weight, especially 18 to 26% by weight of the plasticizer, based on the total weight of the mixture.

The amount of the component (b) in the blend is frequently in the range of 3 to 69.9% by weight, preferably in the range of 5 to 63% by weight, especially in the range of 10 to 55% by weight, based on the total weight of the blend in anhydrous form, calculated as the anhydrous form of component (b).

The total amount of the components (a) and (b), calculated in their anhydrous form is usually in the range of 5 to 70% by weight, in particular in the range of 7 to 65% by weight and especially in the range of 15 to 60% by weight, based on the total weight of blend in anhydrous form.

In a particular the polymer blend comprises the components (a) and (b) in the following relative amounts:
(a) 1 to 70% by weight, preferably 5 to 60% by weight, especially 6 to 58% by weight, based on the total weight of components (a) and (b), of the component (a) and
(b) 30 to 99% by weight, preferably 40 to 95% by weight, especially 42 to 94% by weight, based on the total weight of components (a) and (b), of the component (b),
where the components (a) and (b) are calculated in their anhydrous form.

In particular, the weight ratio of the components (a) : (b) is in the range of 1:99 to 3:7, more particularly in the range of 1:19 to 3:2, especially in the range of 1:1.35 to 13:1.

The thermoplastic polymer blend according to the invention further comprises at least one thermoplastic polyester as component (c), which selected from the group consisting of aliphatic polyesters, aliphatic-aromatic polyesters and mixtures thereof.

The amount of the component (c) in the blend is frequently in the range of 30 to 95% by weight, preferably in the range of 35 to 93% by weight, especially in the range of 40 to 85% by weight, based on the total weight of the blend in anhydrous form.

In particular, the weight ratio of the components (a) : (c) is in the range of 1:100 to 1:1, particularly in the range of 1:40 to 1:1.5, especially in the range of 1:20 to 1:2.

In particular, the weight ratio of the components (b) : (c) is in the range of 1:30 to 2:1, particularly in the range of 1:20 to 1.2:1, especially in the range of 1:15 to 1:1.

Preferably, the polyesters of component (c) have a melt volume rate (MVR) according to EN ISO 1133 (190°C, 2.16 kg weight) in the range of 0.5 to 70 cm³/10 min, preferably in the range of 0.5 to 30 cm³/10 min.

Preferably, the polymer blend of the present invention comprises at least one polyester (c), which has a melting temperature Tm in the range from 45 to 160°C, in particular in the range from 50 to 150°C, especially in the range from 60 to 140°C. If the polymer has a melting point, it is semicrystalline or crystalline. If the polymer is amorphous, it preferably has a softening temperature in the range from 45 to 160°C, in particular in the range from 50 to 150°C, especially in the range from 60 to 140°C. The softening temperature is understood as the Vicat softening temperature (VST), determined in accordance with DIN EN ISO 306:2014-03 at a heating rage of 50°C/h by applying a point load of 10 N to a specimen, so called VST/A50 temperature, if not stated otherwise.

The polyester (c) has usually a number average molecular weight (Mn) in the range from 2000 to 100000 g/mol, in particular in the range from 5000 to 80000 g/mol, preferably in the range from 7000 to 70000 g/mol, a weight-average molecular weight (Mw) of from 3000 to 300000 g/mol, preferably from 3000 to 200000 g/mol, in particular in the range of 15000 to 200000 g/mol. The Mw/Mn ratio is frequently in the range of 1 to 6, in particular in the range of 2 to 5.

The viscosity number (VN) of the polyester (c) is usually in the range of 50 to 450 g/ml, preferably in the range of 80 to 250 g/ml. The melting point is usually in the range from 85 to 150°C, preferably in the range from 95 to 140°C, as determined from DSC.

The polyester (c) may have hydroxyl and/or carboxyl terminal groups in any desired ratio. Particularly, polyester (c) having acid numbers of less than 1.5 mg KOH/g, as determined by the procedure described above.

In particular, the component (c) is biodegradable, especially biodegradable in accordance with DIN EN 13432.

A distinction is drawn between aliphatic-aromatic polyesters, hereinafter referred to as component (c1), composed of aliphatic diols and aliphatic and aromatic diacids and aliphatic polyesters, hereinafter referred to as component (c2), composed of aliphatic diols and aliphatic diacids or composed of hydroxyalkanoic acids or alicyclic lactones.

Aliphatic-aromatic polyesters (c1) are also referred to as semi-aromatic polyesters, i.e. polyesters based on aromatic dicarboxylic acids and aliphatic dihydroxyl compounds, and polyesters based on mixtures of aromatic dicarboxylic acids with aliphatic dicarboxylic acids and aliphatic dihydroxyl compounds. Aliphatic-aromatic polyesters are preferably polyesters based on mixtures of aliphatic dicarboxylic acids with aromatic dicarboxylic acids and aliphatic dihydroxyl compound. These polymers may be present individually or in the mixtures thereof.

Preferably, "aliphatic-aromatic polyesters" shall also be understood to mean polyester derivatives such as polyetheresters, polyesteramides or polyetheresteramides and polyesterurethanes, as described, for example, in WO 2012/2013506. The suitable aliphatic-aromatic polyesters include linear, non-chain-extended polyesters, as described for example in WO 92/09654. Preference is given to chain-extended and/or branched aliphatic-aromatic polyesters. The latter are known from WO 96/15173, WO 96/15174, WO 96/15175, WO 96/15176, WO 96/21689, WO 96/21690, WO 96/21691, WO 96/21692, WO 96/25446, WO 96/25448 and WO 98/12242, to which explicit reference is made. Likewise considered are mixtures of different aliphatic-aromatic polyesters. Interesting recent developments are based on renewable raw materials and are described inter alia in WO 2006/097353, WO 2006/097354 and WO 2010/034710.

The preferred aliphatic-aromatic polyesters (c1) are characterized by a number average molecular weight Mn in the range from 5000 to 100000 g/mol, especially in the range from 10000 to 75000 g/mol, preferably in the range from 15000 to 50000 g/mol as determined by GPC, as described herein. The preferred aliphatic-aromatic polyesters (c1) are characterized by a weight-average molecular weight in the range of 50000 to 250000, especially in the range from 70000 to 200000 g/mol, preferably in the range from 90000 to 150000 g/mol as determined by GPC as described herein. They usually have a melting point in the range 60°C to 170°C, preferably in the range 80°C to 150°C, especially in the range 100 to 140°C, determined by DSC starting from a melt at 200°C, hold for 5 min. followed by cooling the melt with a cooling rate of 20 K/min.

Preferred aliphatic-aromatic polyesters comprise as essential components:
- an acid component comprising
   c1-i. 20 to 95 mol%, in particular 20 to 90 mol%, especially 20 to 85 mol%, based on the total mol percentage of the components i and ii, of at least one aliphatic dicarboxylic acid or the ester-forming derivatives thereof or mixtures thereof as component i;
   c1-ii. 5 to 80 mol%, in particular 10 to 80 mol%, especially 15 to 80 mol%, based on the total mol percentage of the components i and ii, of at least one aromatic dicarboxylic acid or the ester-forming derivative thereof or mixtures thereof as component ii;
- c1-iii. at least one diol as component iii selected from C₂-C₁₂-alkanediols;
- optionally a component selected from
   c1-iv. one or more chain extender as component c1-iv.a and/or one or more branching agent as component c1-iv.b.

Aliphatic dicarboxylic acids and the ester-forming derivatives thereof (component c1-i) that are generally considered are those having 2 to 18 carbon atoms (C₂-C₁₈-dicarboxylic acid), preferably 4 to 18 carbon atoms (C₄-C₁₈-dicarboxylic acid). They may be either linear or branched. However, it is also possible in principle to employ dicarboxylic acids having a greater number of carbon atoms, for example having up to 30 carbon atoms.

Examples of aliphatic dicarboxylic acids and the ester-forming derivatives include, but are not limited to: oxalic acid, malonic acid, succinic acid, 2-methylsuccinic acid, glutaric acid, 2-methylglutaric acid, 3-methylglutaric acid, α-ketoglutaric acid, adipic acid, pimelic acid, azelaic acid, sebacic acid, brassylic acid, fumaric acid, 2,2-dimethylglutaric acid, suberic acid, diglycolic acid, oxaloacetic acid, glutamic acid, aspartic acid, itaconic acid and maleic acid, their anhydrides and their C₁-C₄-alkyl esters. These dicarboxylic acids or the ester-forming derivatives thereof may be used individually or as a mixture of two or more thereof.

It is preferable to employ succinic acid, adipic acid, azelaic acid, sebacic acid, brassylic acid or their respective ester-forming derivatives or mixtures thereof. It is particularly preferable to employ adipic acid, azelaic acid or sebacic acid or the respective ester-forming derivatives thereof or mixtures thereof. As mentioned above, succinic acid, sebacic acid, azelaic acid, and brassylic acid additionally have the advantage that they are obtainable from renewable raw materials.

The aliphatic dicarboxylic acid (component c1-i) is used in particular in an amount from 20 to 90 mol%, especially from 25 to 85 mol% or from 30 to 85 mol%, based on the total mol percentage of the acid components c1-i and c1-ii. Sebacic acid, azelaic acid and brassylic acid are obtainable from renewable raw materials, in particular from castor oil.

The aromatic dicarboxylic acids and the ester-forming derivatives thereof (component c1-ii) may be used individually or as a mixture of two or more thereof. Particular preference is given to using terephthalic acid or furan-2,5-dicarboxylic acid and the ester-forming derivatives thereof. The di-C₁-C₆-alkyl esters, such as dimethyl, diethyl, di-n-propyl, diisopropyl, di-n-butyl, diisobutyl, di-tert-butyl, di-n-pentyl-, di-isopentyl or di-n-hexyl esters may be mentioned in particular as ester-forming derivatives. Anhydrides of the dicarboxylic acids can also be used. A particularly suitable ester-forming derivative of terephthalic acid is dimethyl terephthalate and the particularly suitable ester-forming derivatives of furan-2,5-dicarboxylic acid is furan-2,5-dicarboxylic acid dimethyl ester.

In one group of embodiments, the aromatic dicarboxylic acid is terephthalic acid or an ester forming derivative thereof. Preferably, the terephthalic acid (component c1-ii) or the ester forming derivative thereof, respectively, is present in an amount from 30 to 75 mol%, more preferably from 35 to 65 mol% and especially from 40 to 60 mol%, based on the total mol percent of the acid components c1-i and c1-ii. In this case, the total amount of aliphatic dicarboxylic acid or the ester-forming derivative thereof is preferably in the range of 25 to 70 mol%, more preferably in the range of 35 to 65 mol% and especially in the range of 40 to 60 mol%, based on the total mol percent of the acid components c1-i and c1-ii.

In another group of embodiments, the aromatic dicarboxylic acid is furan-2,5-dicarboxylic acid or an ester forming derivative thereof. Preferably, the furan-2,5-dicarboxylic acid (component c1-ii) or the ester forming derivative thereof, respectively, is present in an amount from 40 to 80 mol%, more preferably from 50 to 80 mol% and especially from 60 to 80 mol%, based on the total mol percent of the acid components c1-i and c1-ii. In this case, the total amount of aliphatic dicarboxylic acid or the ester-forming derivative thereof is preferably in the range of 20 to 60 mol%, more preferably in the range of 20 to 50 mol% and especially in the range of 20 to 40 mol%, based on the total mol percent of the acid components c1-i and c1-ii.

Generally, the diols (component c1-iii) are selected from branched or linear alkanediols having 2 to 12 carbon atoms (C₂-C₁₂-alkandiol), preferably 2 to 6 carbon atoms (C₂-C₆-alkandiol), or cycloalkanediols having 5 to 10 carbon atoms (C₅-C₁₀-cycloalkandiol). Examples of suitable alkanediols are ethylene glycol, propane-1,2-diol, propane-1,3-diol, butane-1,2-diol, butane-1,4-diol, pentane-1,5-diol, 2,4-dimethyl-2-ethylhexane-1,3-diol, 2,2-dimethylpropane-1,3-diol, 2-ethyl-2-butylpropane-1,3-diol, 2-ethyl-2-isobutylpropane-1,3-diol, 2,2,4-trimethylhexane-1,6-diol, especially ethylene glycol, propane-1,3-diol, butane-1,4-diol and 2,2-dimethylpropane-1,3-diol (neopentyl glycol). Examples of suitable cylcoalkanediols are cyclopentanediol, cyclohexane-1,4-diol, cyclohexane-1,2-dimethanol, cyclohexane-1,3-dimethanol, cyclohexane-1,4-dimethanol and 2,2,4,4-tetramethylcyclobutane-1,3-diol. The aliphatic-aromatic polyesters may also include combinations of different alkanediols or cycloalkanediols. Particular preference is given to butane-1,4-diol and propane-1,3-diol, especially to butane-1,4-diol. Propane-1,3-diol and butane-1,4-diol have an advantage that they are obtainable as a renewable raw material. PCT/EP2008/006714 discloses a biotechnological process for the preparation of 1,4-butanediol starting from different carbohydrates using microorganisms from the class of the Pasteurellaceae.

As a rule, the diol (component c1-iii) is adjusted with respect to the acids (components c1-i and c1-ii) in a ratio of diol to dioic acids in the range of 1.0 to 2.5:1 and preferably from 1.3 to 2.2:1 at the beginning of the polymerization. Excess amounts of diol are removed during the polymerization so that an approximately equimolar ratio is established at the end of the polymerization. Approximately equimolar is understood as meaning a diol/ dicarboxylic acid ratio especially in the range of 0.98 to 1.02:1.

Therefore, the component c1-iii is present in the polyester in particular in an amount of from 98 to 102 mol%, preferably from 99 to 100 mol%, and particularly preferably of 100 mol%, based on the total of the molar percentages of repeating units c1-i and c1-ii.

Said aliphatic-aromatic polyesters may also be endcapped. Thus, for example, OH terminal groups can be acid-modified by reaction with phthalic acid, phthalic anhydride, trimellitic acid, trimellitic anhydride, pyromellitic acid or pyromellitic anhydride. Aliphatic-aromatic polyesters having acid numbers of less than 1.5 mg KOH/g are preferred.

In preferred groups of embodiments, suitable aliphatic-aromatic polyesters (c1) comprise:
c1-i from 25 to 70 mol%, preferably from 35 to 65 mol% and especially from 40 to 60 mol%, based on the total of the molar percentages of repeating units c1-i and c1-ii, of repeating units c1-i of at least one aliphatic C₄-C₁₈-dicarboxylic acid or its ester-forming derivatives;
c1-ii from 30 to 75 mol%, preferably from 35 to 65 mol% and especially from 40 to 60 mol%, based on the total of the molar percentages of repeating units c1-i and c1-ii, of repeating units c1-ii selected from the group consisting of terephthalic acid, its ester-forming derivates, and mixtures thereof;
c1-iii from 98 to 102 mol%, preferably 99 to 100 mol%, especially 100 mol%, based on the total of the molar percentages of repeating units c1-i and c1-ii, of repeating units c1-iii of at least one C₂-C₆-alkandiol, in particular of 1,3-propanediol and/or 1,4-butanediol.

In particular, suitable aliphatic-aromatic polyesters (c1) comprise:
c1-i from 25 to 70 mol%, preferably from 35 to 65 mol% and especially from 40 to 60 mol%, based on the total of the molar percentages of repeating units c1-i and c1-ii, of repeating units c1-i selected from the group consisting of succinic acid, adipic acid, sebacic acid, azelaic acid, brassylic acid, their ester-forming derivatives and mixtures thereof; preferably from the group consisting of adipic acid, sebacic acid, azelaic acid, their ester-forming derivatives and mixtures thereof;
c1-ii from 30 to 75 mol%, preferably from 35 to 65 mol% and especially from 40 to 60 mol%, based on the total of the molar percentages of repeating units c1-i and c1-ii, of repeating units c1-ii selected from the group consisting of terephthalic acid, dimethyl terephthalate and mixtures thereof; and
c1-iii from 98 to 102 mol%, preferably from 99 to 100mol%, especially 100 mol%, based on the components i to ii, of repeating units c1-iii selected from the group consisting of 1,3-propanediol, 1,4-butanediol and mixtures thereof; preferably 1,4-butanediol.

In another preferred groups of embodiments, suitable aliphatic-aromatic polyesters (c1) comprise:
c1-i from 20 to 60 mol%, preferably from 20 to 50 mol% and especially from 20 to 40 mol%, based on the total of the molar percentages of repeating units c1-i and c1-ii', of repeating units c1-i of at least one aliphatic C₄-C₁₈-dicarboxylic acid or its ester-forming derivatives;
c1-ii' from 40 to 80 mol%, preferably from 50 to 80 mol% and especially from 60 to 80 mol%, based on the total of the molar percentages of repeating units c1-i and c1-ii', of repeating units c1-ii' selected from the group consisting of furandicarboxylic acid its ester-forming derivates, and mixtures thereof;
c1-iii from 98 to 102 mol%, preferably from 99 to 100mol%, especially 100 mol%, based on the total of the molar percentages of repeating units c1-i and c1-ii', of repeating units c1-iii of at least one C₂-C₆-alkandiol, in particular of 1,3-propanediol and/or 1,4-butanediol.

In particular, suitable aliphatic-aromatic polyesters (c1) comprise:
c1-i from 20 to 60 mol%, preferably from 20 to 50 mol% and especially from 20 to 40 mol%, based on the total of the molar percentages of repeating units c1-i and c1-ii, of repeating units c1-i selected from the group consisting of succinic acid, adipic acid, sebacic acid, azelaic acid, brassylic acid, their ester-forming derivatives and mixtures thereof; preferably from the group consisting of adipic acid, sebacic acid, azelaic acid, their ester-forming derivatives and mixtures thereof;
c1-ii' from 40 to 80 mol%, preferably from 50 to 80 mol% and especially from 60 to 80 mol%, based on the total of the molar percentages of repeating units c1-i and c1-ii', of repeating units c1-ii' selected from the group consisting of furandicarboxylic acid, furandicarboxylic acid dimethyl ester and mixtures thereof and
c1-iii from 98 to 102 mol%, preferably from 99 to 100mol%, especially 100 mol%, based on the components i to ii', of repeating units c1-iii selected from the group consisting of 1,3-propanediol, 1,4-butanediol and mixtures thereof; preferably 1,4-butanediol.

In particularly preferred embodiments, component (c) comprises an aliphatic-aromatic polyester selected from the group of
aliphatic-aromatic polyesters comprising:
c1-i) from 25 to 70 mol%, preferably from 35 to 65 mol% and especially from 40 to 60 mol%, based on the total of the molar percentages of repeating units c1-i and c1-ii, of repeating units c1-i of at least one aliphatic C₄-C₁₈-dicarboxylic acid;
c1-ii) from 30 to 75 mol%, preferably from 35 to 65 mol% and especially from 40 to 60 mol%, based on the total of the molar percentages of repeating units c1-i and c1-ii, of repeating units c1-ii of terephthalic acid; and
c1-iii) from 98 to 102 mol%, 98 to 100 mol%, preferably 99 to 100 mol%, especially 100 mol%, based on the total of the molar percentages of repeating units c1-i and c1-ii, of repeating units c1-iii of at least one C₂-C₆-alkandiol, in particular of 1,3-propanediol and/or 1,4-butanediol.
   and
aliphatic-aromatic polyesters comprising:
   c2-i) from 20 to 60 mol%, preferably from 20 to 50 mol% and especially from 20 to 40 mol%, based on the total of the molar percentages of repeating units c1-i and c1-ii', of repeating units c1-i of at least one aliphatic C₄-C₁₈-dicarboxylic acid;
   c2-ii) from 40 to 80 mol%, preferably from 50 to 80 mol% and especially from 60 to 80 mol%, based on the total of the molar percentages of repeating units c1-i and c1-ii', of repeating units c1-ii' of furandicarboxylic acid; and
   c2-iii) from 98 to 100 102 mol%, preferably from 99 to 100mol%, especially 100 mol%, based on the total of the molar percentages of repeating units c1-i and c1-ii', of repeating units c1-iii of at least one C₂-C₆-alkandiol, in particular of 1,3-propanediol and/or 1,4-butanediol.

In a particular, the aliphatic-aromatic polyester (c1) is selected from poly(butylene adipate-co-terephthalate), poly(butylene sebacate-co-terephthalate), poly(butylene azelate-co-terephthalate), poly(butylene succinate-co-terephthalate), poly(butylene adipate-co-sebacate-co-terephthalate), poly(butylene adipate-co-azelate-co-terephthalate), poly(butylene adipate-co- succinate-co-terephthalate), poly(butylene seba-cate-co-azelate-co-terephthalate), poly(butylene sebacate-co-succinate-co- terephthalate), poly(butylene azelate-co-succinate-co- terephthalate), poly(butylene adipate-co-furanoate), poly(butylene sebacate-co-furanoate), poly(butylene azelate-co-furanoate), poly(butylene succinate-co-furanoate), poly(butylene adipate-co-sebacate-co-furanoate), poly(butylene adipate-co-azelate-co-furanoate), poly(butylene adipate-co-succinate-co-furanoate), poly(butylene sebacate-co-azelate-co-furanoate), poly(butylene sebacate-co-succinate-co-furanoate), poly(butylene azelate-co-succinate-co-furanoate) and mixtures thereof. The aforementioned aliphatic-aromatic polyesters have VST/A50 values in the range of 50 to 160°C, in particular in the range of 55 to 150°C.

In more preferred groups of embodiments, the aliphatic-aromatic polyester (c1) is selected from poly(butylene adipate-co-terephthalate) (PBAT), poly(butylene sebacate-co-terephthalate) (PBSeT), poly(butylene azelate-co-terephthalate) (PBAzT), poly(butylene succinate terephthalate (PBST), poly(butylene adipate-co-sebacate-co-terephthalate) (PBASeT), poly(butylene adipate-co-azelate-co-terephthalate) (PBAAzT), poly(butylene adipate-co-furanoate) (PBAF), poly(butylene sebacate-co-furanoate) (PBSeF), poly(butylene azelate-co-furanoate) (PBAzF), poly(butylene succinate-co-furanoate) (PBSF), poly(butylene adipate-co-sebacate-co-furanoate) (PBASeF), poly(butylene adipate-co-azelate-co-furanoate) (PBAAzF) and mixtures thereof.

Preferably, component (c1) is selected from the group consisting of poly(butylene adipate-co-terephthalate) (PBAT), poly(butylene azelate-co-terephthalate) (PBAzeT), poly(butylene sebacate-co-terephthalate) (PBSeT), poly(butylene sebacate-co-adipate-co-terephthalate) (PBSeAT), poly(butylene sebacate-co-succinate-co-terephthalate) (PBSeST), poly(butylene azelate-co-adipate-co-terephthalate), poly(butylene azelate-co-succinate-co-terephthalate) and mixtures thereof.

Also preferably, the aliphatic-aromatic polyester (c1) is selected from poly(butylene adipate-co-furanoate) and poly(butylene sebacate-co-furanoate), poly(butylene azelate-co-furanoate) and mixtures thereof.

The suitable aromatic-aliphatic polyesters (c1) are commercially available e.g. as ecoflex^{®} grades of BASF SE, as Origo-Bi^{®} grades of Novamont, as Ecopond^{®} grades of Kingfa, as Eco-world^{®} grades from JinHui, as Biocosafe^{®} grades from Xinfu and TH802 grade from Xinjiang Blue-Ridge Tunhe.

The polyesters (c1) can be produced by the processes described in WO-A 92/09654, WO-A 96/15173 or preferably by the processes described in US2011034662A1 and US2011039999A1, in particular in a multistage reaction cascade. The dicarboxylic acids or derivatives thereof are initially reacted together with the diol in the presence of an esterification or transesterification catalyst followed by removal of the volatile components to yield a polyester. This polyester generally has a viscosity number (VN) of from 50 to 300 ml/g, preferably from 100 to 250 ml/g. Catalysts used are usually zinc, aluminium and in particular titanium catalysts. In contrast with the tin, antimony, cobalt and lead catalysts frequently used in the literature, such as, for example, tin dioctanoate, titanium catalysts, such as tetra(isopropyl)orthotitanate and in particular tetrabutyl orthotitanate (TBOT), have the advantage that residual amounts of the catalyst remaining in the product or a secondary product of the catalyst are less toxic. This situation is particularly significant in the case of biodegradable polyesters since they can directly enter the environment via composting.

By means of the two above-mentioned processes, it is possible to tailor the desired MVR range simply by the choice of the process parameters, such as residence time, reaction temperature and amount of volatiles removed during the polycondensation reaction.

Adaptations of the MVR to higher values can be achieved by addition of components c1-iv) in the stated concentration range or, in the case of the polymer mixtures, by a suitable compatibilizer.

The polyester may then be reacted with chain extender c1-iv.a), for example with diisocyanates or with epoxide-containing polymethacrylates in a chain extension reaction to give a polyester having a VN of from 80 to 450 ml/g, preferably from 120 to 300 ml/g.

Polyesters (c1) having a melt volume rate (MVR) according to EN ISO 1133 (190°C, 2.16 kg weight) in the range of 0.5 to 70 cm³/10 min, preferably in the range of 0.5 to 50 cm³/10 min in particular in the range of 0.5 to 30 cm³/10 min, especially in the range of 0.5 to 20 cm³/10 min are particularly suitable as the polyester (c1).

Optionally, the polyester, in particular the polyester (c1) may comprise from 0 to 2% by weight, e.g. from 0.1 to 2.0% by weight, in particular from 0.2 to 1.5% by weight and especially from 0.3 to 1% by weight, based on the total weight of the components c1-i) to c1-iii), of a further component (iv) or (c1-iv), respectively, which is selected from chain extenders (iv.a) or (c1-iv.a), respectively, and branching agents (iv.b) or (c1-iv.b), respectively.

Chain extenders (iv.a) or (c1-iv.a), respectively, are polyfunctional compounds having at least 2 reactive groups, which are capable of reacting with with the terminal functional group of the polyester and thereby increase its molecular weight. selected from the group consisting of di- or polyfunctional isocyanates, including diisocyanates and polyfunctional isocyanurates, di- or polyfuncational oxazolines, di- or polyfuncatoinal carboxylic anhydrides, such as maleic anhydride, di- or polyfuncatoinal epoxides, in particular an epoxide-containing poly(meth)acrylate.

Preferred chain extenders are aliphatic and aromatic diisocyanates and the isocyanurates thereof.

Examples of aromatic diisocyanate are in particular toluene 2,4-diisocyanate, toluene 2,6-diisocyanate, 2,2'-diphenylmethane diisocyanate, 2,4'-diphenylmethane diisocyanate, 4,4'-diphenylmethane diisocyanate, naphthylene 1,5-diisocyanate or xylylene diisocyanate. Amongst these, 2,2'-, 2,4'- and 4,4'-diphenylmethane diisocyanate are particularly preferred. In general, the latter diisocyanates are used as a mixture. The diisocyanates may also comprise urethione groups in minor amounts, for example up to 5% by weight, based on the total weight of the diisocyanate, for example for blocking the isocyanate groups.

Aliphatic diisocyanate are in particular linear or branched alkylene diisocyanates and cycloalkylene diisocyanates having 2 to 20 carbon atoms, preferably 3 to 12 carbon atoms, e.g. hexamethylene 1,6-diisocyanate, isophorone diisocyanate or methylenebis(4-isocyanatocyclohexane). Particularly preferred aliphatic diisocyanates are isophorone diisocyanate and in particular hexamethylene 1,6-diisocyanate.

The preferred isocyanurates include the aliphatic isocyanurates which are derived from alkylene diisocyanates or cycloalkylene diisocyanates having 2 to 20 carbon atoms, preferably 3 to 12 carbon atoms, e.g. isophorone diisocyanate or methylenebis(4-isocyanatocyclohexane). The alkylene diisocyanates may be either linear or branched. Isocyanurates which are based on n-hexamethylene diisocyanate, for example cyclic trimers, pentamers or higher oligomers of hexamethylene 1,6-diisocyanate, are particularly preferred.

Suitable chain extenders are also polyepoxides. Polyepoxides are in particular selected from homopolymers and copolymers having epoxide groups. The units carrying epoxide groups are preferably formed from glycidyl esters or glycidyl ethers having an ethylenically unsaturated double bond, in particular from (meth)acrylates. Suitable comonomers are styrene, acrylates and/or methacrylates. Copolymers having a proportion of glycidyl (meth)acrylate of greater than 20% by weight, particularly preferably of greater than 30% by weight, especially preferably of greater than 50% by weight, based on the total amount of monomers forming the epoxid polymer have proven advantageous. The epoxide equivalent weight (EEW) in these polymers is preferably from 150 to 3000 g/equivalent, particularly preferably from 200 to 500 g/equivalent. The average molecular weight (weight average) Mw of the polymers is preferably from 2000 to 25000 g/mol, in particular from 3000 to 8000 g/mol. The average molecular weight (number average) Mn of the polymers is preferably from 400 to 6000 g/mol, in particular from 1000 to 4000 g/mol. The polydispersity (Mw/Mn) is in general from 1.5 to 5. Copolymers of the abovementioned type which contain epoxide groups are sold, for example, by BASF under the brand Joncryl^{®} ADR. A particularly suitable chain extender is Joncryl^{®} ADR 4468 or Joncryl^{®} ADR 4400.

Branching agents are in particular polyfunctional alcohols, polyfunctional carboxylic acids and polyfunctional carboxylic acid derivatives. Polyfunctional means that the compounds have at least three functional groups which are capable of forming a bound with the components . Particularly preferred compounds have from three to six functional groups. The following may be mentioned by way of example: tartaric acid, citric acid, malic acid; trimethylolpropane, trimethylolethane, pentaerythritol; polyethertriols and glycerol, trimesic acid, trimellitic acid, trimellitic anhydride, pyromellitic acid and pyromellitic anhydride. Polyols such as trimethylolpropane, pentaerythritol and in particular glycerol are preferred. As a rule, it is expedient to add the branching agents at a relatively early time to the polycondensation reaction of the monomers which form the polyester (c) or (c1) respectively.

Here and throughout the specification, aliphatic polyesters (component c2), are understood to mean polyesters based on one or more aliphatic dicarboxylic acids and one or more aliphatic dihydroxyl compounds, polyesters based on aliphatic hydroxycarboxylic acids, optionally in combination with aliphatic dicarboxylic acids and aliphatic diols, and polyesters based on alicyclic lactones, optionally in combination with aliphatic dicarboxylic acids and aliphatic diols. To prepare the aliphatic-aliphatic polyesters, instead of the dicarboxylic acids, their respective ester-forming derivatives or mixtures thereof with the dicarboxylic acids may also be used.

Aliphatic dicarboxylic acids and the ester-forming derivatives thereof that are generally considered are those having 2 to 18 carbon atoms, preferably 4 to 10 carbon atoms. They may be either linear or branched. However, it is also possible in principle to employ dicarboxylic acids having a greater number of carbon atoms, for example having up to 30 carbon atoms.

Aliphatic polyesters (c2) having a melt volume rate (MVR) according to EN ISO 1133 (190°C, 2.16 kg weight) in the range of 1 to 50 cm³/10 min, preferably in the range of 1.5 to 15 cm³/10 min, especially in the range of 1.5 to 10 cm³/10 min are particularly preferred.

Suitable examples of aliphatic polyester (c2) include, but are not limited to polyhydroxyalkanoates, referred to as (c2-a), polylactic acids, referred to as (c2-b), aliphatic polyesters based on aliphatic dicarboxylic acids and aliphatic diols, referred to as (c2-c), and mixtures thereof.

Polyhydroxyalkanoates are also referred to as polyhydroxy fatty acids and are understood in the context of the invention as meaning those, which comprise monomers having a chain length in the polymer backbone of at least 3 carbon atoms. Polylactic acid and polyhydroxyacetic acid (also referred to as polyglycolic acid) are therefore not polyhydroxyalkanoates in the context of the invention. In the context of the invention, polycaprolactones (PCL) are not understood as polyhydroxyalkanoates, either.

In accordance with the invention, preference is given to using at least one polyhydroxyalkanoate comprising repeating monomer units of the formula (1)

[-O-CHR-(CH₂)ₘ-CO-] (1)

where R is hydrogen or a linear or branched alkyl group having 1 to 20, preferably 1 to 16 carbon atoms, preferably 1 to 6 carbon atoms and m=numbers from 1 to 18, preferably 1, 2, 3, 4, 5 and 6; and/or homopolymers of 2-hydroxybutyric acid.

The polyhydroxy fatty acids comprise homopolymers, i.e. polyhydroxy fatty acids consisting of identical hydroxy fatty acid monomers and also copolymers, i.e. polyhydroxy fatty acids consisting of different hydroxy fatty acid monomers.

The polyhydroxy fatty acids may be used individually or in the form of any mixtures.

Polyhydroxy fatty acids in the context of this invention frequently have molecular weights Mw of 5000 to 1000000, in particular 30000 to 1000000, particularly 70000 to 1000000, preferably 100000 to 1000000 or 200000 to 600000 and/or melting points in the range of 100 to 190°C.

Polyhydroxy fatty acids preferably have a melt volume rate (MVR) according to EN ISO 1133 (165°C, 5 kg weight) in the range of 1 to 50 cm³/10 min, preferably 1.5 to 40 cm³/10 min, more preferably 2 to 30 cm³/10 min.

In one embodiment of the invention, the at least one polyhydroxyalkanoate is selected from the group consisting of
- poly(3-hydroxypropionates) (P3HP);
- polyhydroxybutyrates (PHB);
- polyhydroxyvalerates (PHV);
- polyhydroxyhexanoates (PHHx);
- polyhydroxyoctanoates (PHO);
- polyhydroxyoctadecanoates (PHOd);
- copolyesters of hydroxybutyric acid with at least one monomer selected from the group consisting of 3-hydroxypropionic acid, hydroxyvaleric acids, hydroxyhexanoic acids, hydroxyoctanoic acids and hydroxyoctadecanoic acids;
- copolyesters of hydroxyvaleric acid with at least one monomer selected from the group consisting of 3-hydroxypropionic acid, hydroxyhexanoic acids, hydroxyoctanoic acids and hydroxyoctadecanoic acids; and
- copolyesters of hydroxyhexanoic acid with at least one monomer selected from the group consisting of 3-hydroxypropionic acid, hydroxyoctanoic acid and hydroxyoctadecanoic acid.

Suitable polyhydroxybutyrates (PHB) may be selected from the group consisting of poly(3-hydroxybutyrates) (P3HB), poly(4-hydroxybutyrates) (P4HB) and copolymers of at least 3 hydroxybutyric acids selected from the group consisting of 3-hydroxybutyric acid and 4-hydroxybutyric acid. Further suitable are copolymers of 3-hydroxybutyric acid and 4-hydroxybutyric acid. These copolymers are characterized by the following abbreviations: [P(3HB-co-4HB)], where 3HB is 3-hydroxybutyrate and 4HB is 4-hydroxybutyrates.

Poly(3-hydroxybutyrates) are marketed for example by Tianan under the brand name Enmat^{®}. Poly-3-hydroxybutyrate-co-4-hydroxybutyrates have been developed by Metabolix in particular. They are nowadays commercialized by CJ CheilJedang.

Suitable polyhydroxyvalerates (PHV) may be selected from the group consisting of
- homopolymers of 3-hydroxyvaleric acid [=poly(3-hydroxyvalerates) (P3HV)];
- homopolymers of 4-hydroxyvaleric acid [=poly(4-hydroxyvalerates) (P4HV)];
- homopolymers of 5-hydroxyvaleric acid [=poly(5-hydroxyvalerates) (P5HV)];
- homopolymers of 3-hydroxymethylvaleric acid [=poly(3-hydroxymethylvalerates) (P3MHV)]; and
- copolymers of at least 3 hydroxyvaleric acids selected from the group consisting of 3-hydroxyvaleric acid, 4-hydroxyvaleric acid, 5-hydroxyvaleric acid and 3-hydroxymethylvaleric acid.

Suitable polyhydroxyhexanoates (PHHx) may be selected from the group consisting of poly(3-hydroxyhexanoates) (P3HHx), poly(4-hydroxyhexanoates) (P4HHx), poly(6-hydroxyhexanoates) (P6HHx) and copolymers of at least 3 hydroxyhexanoic acids selected from the group consisting of 3-hydroxyhexanoic acid, 4-hydroxyhexanoic acid and 6-hydroxyhexanoic acid.

Suitable polyhydroxyoctanoates (PHO) may be selected from the group consisting of poly(3-hydroxyoctanoates) (P3HO), poly(4-hydroxyoctanoates) (P4HO), poly(6-hydroxyoctanoates) (P6HO) and copolymers of at least 3 hydroxyoctanoic acids selected from the group consisting of 3-hydroxyoctanoic acid, 4-hydroxyoctanoic acid and 6-hydroxyoctanoic acid.

Suitable copolyesters of hydroxybutyric acid with at least one monomer selected from the group consisting of 3-hydroxypropionic acid, hydroxyvaleric acids, hydroxyhexanoic acids, hydroxyoctanoic acids and hydroxyoctadecanoic acids may be selected from the group consisting of
- copolyesters of 4-hydroxybutyric acid with 3-hydroxyvaleric acid [P(4HB-co-3HV)];
- copolyesters of 3-hydroxybutyric acid with 3-hydroxyvaleric acid [P(3HB-co-3HV)];
- copolyesters of 4-hydroxybutyric acid with 3-hydroxyhexanoic acid [P(4HB-co-3HHx)];
- copolyesters of 3-hydroxybutyric acid with 3-hydroxyhexanoic acid [P(3HB-co-3HHx)];
- copolyesters of 4-hydroxybutyric acid with 3-hydroxyoctanoic acid [P(4HB-co-3HO)];
- copolyesters of 3-hydroxybutyric acid with 3-hydroxyoctanoic acid [P(3HB-co-3HO)]; and
- copolyesters of 4-hydroxybutyric acid with 3-hydroxyoctadecanoic acid [P(4HB-co-3HOD)] and copolyesters of 3-hydroxybutyric acid with 3-hydroxyoctadecanoic acid [P(3HB-co-3HOd)].

Preference is given to using poly-3-hydroxybutyrate-co-3-hydroxyhexanoate having a 3-hydroxyhexanoate proportion of 1 to 20 and preferably of 3 to 15 mol % based on the total amount of polyhydroxy fatty acid. Such poly-3-hydroxybutyrate-co-3-hydroxyhexanoates [P(3HB-co-3HHx] are known from Kaneka and are commercially available under the trade names Aonilex^{™} X131A and Aonilex^{™} X151A.

Suitable copolyesters of hydroxyvaleric acid are preferably copolyesters of 4-hydroxyvaleric acid and/or 3-hydroxyvaleric acid with at least one monomer selected from the group consisting of 3-hydroxypropionic acid, hydroxyhexanoic acids, hydroxyoctanoic acids, especially 3-hydroxyoctanoic acid and hydroxyoctadecanoic acids.

Suitable copolyesters of hydroxyhexanoic acid are preferably copolyesters of 3-hydroxyhexanoic acid with at least one monomer selected from the group consisting of 3-hydroxypropionic acid and hydroxyoctanoic acid, preferably 3-hydroxyoctanoic acid and hydroxyoctadecanoic acids.

In one embodiment of the invention, the at least one polyhydroxyalkanoate is selected from the group consisting of poly(3-hydroxypropionates) (P3HP); copolymers of at least 3 hydroxybutyric acids selected from the group consisting of 3-hydroxybutyric acid and 4-hydroxybutyric acid; copolymers of 3-hydroxybutyric acid and 4-hydroxybutyric acid; poly(3-hydroxyvalerates) (P3HV); poly(4-hydroxyvalerates) (P4HV); poly(5-hydroxyvalerates) (P5HV); poly(3-hydroxymethyl-valerates) (P3MHV); copolymers of at least 3 hydroxyvaleric acids selected from the group consisting of 3-hydroxyvaleric acid, 4-hydroxyvaleric acid, 5-hydroxyvaleric acid and 3-hydroxymethylvaleric acid; poly(3-hydroxyhexanoates) (P3HHx); poly(4-hydroxyhexanoates) (P4HHx); poly(6-hydroxyhexanoates) (P6HHx); copolymers of at least 3 hydroxyhexanoic acids selected from the group consisting of 3-hydroxyhexanoic acid, 4-hydroxyhexanoic acid and 6-hydroxyhexanoic acid; poly(3-hydroxyoctanoates) (P3HO); poly(4-hydroxyoctanoates) (P4HO); poly(6-hydroxyoctanoates) (P6HO); copolymers of at least 3 hydroxyoctanoic acids selected from the group consisting of 3-hydroxyoctanoic acid, 4-hydroxyoctanoic acid and 6-hydroxyoctanoic acid; poly(3-hydroxyoctanoates) (P3HO); poly(4-hydroxyoctanoates) (P4HO); poly(6-hydroxyoctanoates) (P6HO); copolymers of at least 3 hydroxyoctanoic acids selected from the group consisting of 3-hydroxyoctanoic acid, 4-hydroxyoctanoic acid and 6-hydroxyoctanoic acid; copolyesters of 2-hydroxybutyric acid with at least one monomer selected from the group consisting of 3-hydroxypropionic acid, hydroxyvaleric acids, hydroxyhexanoic acids, hydroxyoctanoic acids and hydroxyoctadecanoic acids; copolyesters of 4-hydroxybutyric acid with 3-hydroxyoctanoic acid [P(4HB-co-3HO)], copolyesters of 3-hydroxybutyric acid with 3-hydroxyoctanoic acid [P(3HB-co-3HO)], copolyesters of 4-hydroxybutyric acid with 3-hydroxyoctadecanoic acid [P(4HB-co-3HOd)], copolyesters of 3-hydroxybutyric acid with 3-hydroxyoctadecanoic acid [P(3HB-co-3HOd)]; copolyesters of hydroxyvaleric acid, especially of 3-hydroxyvaleric acid or 4-hydroxyvaleric acid with at least one monomer selected from the group consisting of 3-hydroxypropionic acid, hydroxyhexanoic acids, hydroxyoctanoic acids and hydroxyoctadecanoic acids; copolyesters of 3-hydroxyhexanoic acid with at least one monomer selected from the group consisting of 3-hydroxypropionic acid, hydroxyoctanoic acid, preferably 3-hydroxyoctanoic acid and hydroxyoctadecanoic acids.

The suitable polyhydroxyalkanoates have, as a rule, a molecular weight Mw of from 100000 to 1000000 and preferably from 300000 to 600000 g/mol, as determined from GPC in HFIP as solvent against narrowly distributed PMMA standards.

Polylactide, also known as polylactic acid, is a thermoplastic polyester with backbone formula (C₃H40₂)ₙ or [-C(CH₃)HC(=O)O-]ₙ, formally obtained by condensation of lactic acid C(CH₃)(OH)HCOOH with loss of water. It can also be prepared by ring-opening polymerization of lactide [-C(CH₃)HC(=O)O-]₂, the cyclic dimer of the basic repeating unit. The suitable PLA comprises at least 90% by weight, preferably more than 95% by weight, of the lactic acid repeating unit, based on the total weight of the PLA.

Particularly, suitable polylactide has a melting point below 240°C, particularly below 230°C, especially below 220°C, as determined from DSC.

Particularly, suitable polylactide has an average molecular weight of greater than 50000 daltons, particularly greater than 60000 daltons, especially greater than 65000 daltons, as determined from GPC. Preference is given to the range of 50000 to 120000 daltons.

Polylactides preferably have a melt volume rate (MVR) according to EN ISO 1133 (190°C, 2.16 kg weight) in the range of 1 to 50 cm³/10 min, preferably 2 to 30 cm³/10 min, more preferably 3 to 20 cm³/10 min.

Preferred polylactides are commercially available from NatureWorks, for example, under the trade name Ingeo^{®} 2003D, 4043D, 4060 D.

In a particular group of embodiments, the aliphatic polyester (c2) is selected from the group consisting of polyhydroxyalkanoates and polylactic acids, and mixtures thereof, preferably from the group consisting of polyhydroxyalkanoates and mixtures thereof.

In a special group of embodiments, the aliphatic polyester (c2) is selected from the group consisting of polylactides.

In another special group of embodiments, the aliphatic polyester (c2) is selected from the group consisting of polyhydroxyalkanoates.

Other examples of aliphatic polyester (c2), which are referred to as (c2-c) and other than (c2-a) and (c2-b), are based on aliphatic dicarboxylic acids and aliphatic diols.

Examples of aliphatic dicarboxylic acids and the ester-forming derivatives include, but are not limited to: the oxalic acid, malonic acid, succinic acid, 2-methylsuccinic acid, glutaric acid, 2-methylglutaric acid, 3-methylglutaric acid, α-ketoglutaric acid, adipic acid, pimelic acid, azelaic acid, sebacic acid, brassylic acid, fumaric acid, 2,2-dimethylglutaric acid, suberic acid, diglycolic acid, oxaloacetic acid, glutamic acid, aspartic acid, itaconic acid and maleic acid, their anhydrides and their C₁-C₄-alkyl esters. These dicarboxylic acids or the ester-forming derivatives thereof may be used individually or as a mixture of two or more thereof.

It is preferable to employ succinic acid, adipic acid, azelaic acid, sebacic acid, brassylic acid or their respective ester-forming derivatives or mixtures thereof. It is particularly preferable to employ succinic acid, adipic acid or sebacic acid or the respective ester-forming derivatives thereof or mixtures thereof. Succinic acid, azelaic acid, sebacic acid and brassylic acid additionally have the advantage that they are obtainable from renewable raw materials.

Therefore, other examples of aliphatic polyesters are particularly, but not limited to aliphatic polyesters in which the aliphatic dicarboxylic acid is selected from succinic acid, adipic acid, azelaic acid, sebacic acid, brassylic acid and mixtures thereof. Particular preference is given to succinic acid, adipic acid and sebacic acid and mixtures thereof.

Examples of aliphatic diols as described above at component c1-iii. Preference is given to C₂-C₆-alkandiol, in particular of 1,3-propanediol and/or 1,4-butanediol, particular preference is given to 1,3-propanediol, 1,4-butanediol and mixtures thereof; 1,4-butanediol is even more preferred.

Hence, other examples of aliphatic polyesters (c2) are particularly poly(butylene succinate-co-adipate), poly(butylene succinate), poly(butylene sebacate), poly(butylene succinate-co-sebacate) and mixtures thereof, especially poly(butylene succinate-co-adipate), poly(butylene succinate), poly(butylene succinate-co-sebacate) and mixtures thereof.

The aliphatic polyesters (c2-c) is commercially available e.g. as BioPBS^{®} grades from PTT-MCC.

The preferred aliphatic polyesters (c2-c) often have a number average molecular weight Mn in the range from 5000 to 100000 g/mol, particularly in the range from 10000 to 75000 g/mol, especially in the range from 15000 to 60000 g/mol, as determined from GPC.

The preferred aliphatic polyesters (c2-c) often have a melting point in the range of 50 to 130 °C, particularly in the range of 55 to 125°C, especially in the range of 65 to 120°C, as determined by DSC.

In particular, the aliphatic polyesters (c2-c), e.g. polyester polyols that are partially or highly crystalline and solid. Such aliphatic polyesters have hydroxyl number in the range of 10 to 34 mg KOH/g, particularly in the range of 27 to 34 mg KOH/g, especially in the range of 28 to 34 mg KOH/g, as determined according to DIN EN ISO 2114:2002-6.

The acid number of suitable aliphatic polyesters (c2-c) is at most 3 mg KOH/g, particularly at most 2 mg KOH/g, particularly at most 1.7 mg KOH/g, as determined according to DIN EN ISO 2114.

In preferred groups of embodiments, component (c) comprises a combination of at least one aliphatic-aromatic polyester (c1) and at least one aliphatic polyester (c2).

In this combination, the weight ratio of component (c1) to component (c2) is generally in the range of 10:1 to 1:10, in particular in the range of 5:1 to 5:1, especially in the range of 3:1 to 1:3. Consequently, in a particularly preferred group of embodiments, component (c) comprises
- 9 to 91% by weight, in particular 20 to 80 by weight, especially 25 to 75% by weight, preferably 50% by weight, based on the total weight of component (c), of at least one component (c1); and
- 9 to 91% by weight, in particular 20 to 80 by weight, especially 25 to 75% by weight, based on the total weight of component (c), of at least one component (c2).

In a particular group of embodiments, component (c) comprises
- 90 to 9% by weight, in particular 20 to 80 by weight, especially 25 to 75%, based on the total weight of component (c), of at least one component (c1) selected from the group consisting of poly(butylene adipate-co-terephthalate) (PBAT), poly(butylene azelate-co-terephthalate) (PBAzeT), poly(butylene sebacate-co-terephthalate) (PBSeT), poly(butylene sebacate-co-adipate-co-terephthalate) (PBSeAT), poly(butylene sebacate-co-succinate-co-terephthalate) (PBSeST), poly(butylene azelate-co-adipate-co-terephthalate), poly(butylene azelate-co-succinate-co-terephthalate), poly(butylene adipate-co-furanoate) and poly(butylene sebacate-co-furanoate), poly(butylene azelate-co-furanoate) and mixtures thereof; and
- 9 to 90% by weight, in particular 20 to 80 by weight, especially 25 to 75%, based on the total weight of component (c), of at least one component (c2) selected from the group consisting of polyhydroxyalkanoates (c2-a) and polylactic acids (c2-b), and mixtures thereof, preferably from the group consisting of polyhydroxyalkanoates (c2-a), or also preferably from the group consisting of polylactic acids (c2-b).

The inventive thermoplastic polymer blend generally has a melt volume rate (MVR) in the range of 1 to 30 cm³/10 min, preferably in the range of 1 to 15 cm³/10 min, more preferably in the range of 2 to 10 cm³/10 min according EN ISO 1133 (190°C, 5 kg weight).

In particular, the inventive polymer blend comprises
- 5 to 70% by weight, particularly 7 to 65% by weight, especially 15 to 60% by weight, based on the total weight of blend in anhydrous form, of a combination of at least one thermoplastic, hydrophobically modified starch (a) and at least one native starch (b);
- 30 to 95% by weight, particularly 35 to 93% by weight, especially 40 to 85% by weight, based on the total weight of blend in anhydrous form, of at least one polyester (c).

Preferably, the inventive polymer blend comprises
- 2 to 30% by weight, in particular 3 to 28% by weight, especially 5 to 25% by weight, based on the total weight of blend in anhydrous form, of at least one thermoplastic, hydrophobically modified starch (a);
- 5 to 63%by weight, in particular 7 to 62% by weight, especially 10 to 55% by weight, based on the total weight of blend in anhydrous form, of at least one thermoplastic native starch (b);
- 35 to 93% by weight, in particular 35 to 90% by weight, especially 40 to 85% by weight, based on the total weight of blend in anhydrous form, of at least one polyester (c); preferably selected from the group consisting of the polyesters (c1) and (c2); more preferably selected from the group consisting of the polyesters (c1) or selected from a combination of at least one (c1) and at least one (c2).

In a particular group of embodiments, the inventive polymer blend comprises
- 2 to 30% by weight, in particular 3 to 28% by weight, especially 5 to 25% by weight, based on the total weight of blend in anhydrous form, of at least one thermoplastic, hydrophobically modified starch (a);
- 5 to 63%by weight, in particular 7 to 62% by weight, especially 10 to 55% by weight, based on the total weight of blend in anhydrous form, of at least one thermoplastic native starch (b);
- 30 to 95% by weight, particularly 35 to 90% by weight, especially 40 to 85% by weight, based on the total weight of blend in anhydrous form, of at least one polyester (c1) selected from the group consisting of poly(butylene adipate-co-terephthalate) (PBAT), poly(butylene azelate-co-terephthalate) (PBAzeT), poly(butylene sebacate-co-terephthalate) (PBSeT), poly(butylene sebacate-co-adipate-co-terephthalate) (PBSeAT), poly(butylene sebacate-co-succinate-co-terephthalate) (PBSeST), poly(butylene azelate-co-adipate-co-terephthalate), poly(butylene azelate-co-succinate-co-terephthalate) and mixtures thereof.

In another particular group of embodiments, the inventive polymer blend comprises
- 2 to 30% by weight, in particular 3 to 28% by weight, especially 5 to 25% by weight, based on the total weight of blend in anhydrous form, of at least one thermoplastic, hydrophobically modified starch (a);
- 5 to 63%by weight, in particular 7 to 62% by weight, especially 10 to 55% by weight, based on the total weight of blend in anhydrous form, of at least one thermoplastic native starch (b);
- 30 to 95% by weight, particularly 35 to 90% by weight, especially 40 to 85% by weight, based on the total weight of blend in anhydrous form, of
   o at least one polyester (c1) selected from the group consisting of poly(butylene adipate-co-terephthalate) (PBAT), poly(butylene azelate-co-terephthalate) (PBAzeT), poly(butylene sebacate-co-terephthalate) (PBSeT), poly(butylene sebacate-co-adipate-co-terephthalate) (PBSeAT), poly(butylene sebacate-co-succinate-co-terephthalate) (PBSeST), poly(butylene azelate-co-adipate-co-terephthalate), poly(butylene azelate-co-succinate-co-terephthalate), poly(butylene adipate-co-furanoate) and poly(butylene sebacate-co-furanoate), poly(butylene azelate-co-furanoate) and mixtures thereof; and
   ∘ at least one polyester (c2) selected from the group consisting of polyhydroxyalkanoates (c2-a) and polylactic acids (c2-b); preferably selected from the group consisting of (c2-a) or of (c2-b).

In another particular group of embodiments, the inventive polymer blend comprises
- 2 to 30% by weight, in particular 3 to 28% by weight, especially 5 to 25% by weight, based on the total weight of blend in anhydrous form, of at least one thermoplastic, hydrophobically modified starch (a);
- 5 to 63%by weight, in particular 7 to 62% by weight, especially 10 to 55% by weight, based on the total weight of blend in anhydrous form, of at least one thermoplastic native starch (b);
- 30 to 95% by weight, particularly 35 to 90% by weight, especially 40 to 85% by weight, based on the total weight of blend in anhydrous form, of a combination of
   ∘ at least one polyester (c1) selected from the group consisting of poly(butylene adipate-co-terephthalate) (PBAT), poly(butylene azelate-co-terephthalate) (PBAzeT), poly(butylene sebacate-co-terephthalate) (PBSeT), poly(butylene sebacate-co-adipate-co-terephthalate) (PBSeAT), poly(butylene sebacate-co-succinate-co-terephthalate) (PBSeST), poly(butylene azelate-co-adipate-co-terephthalate), poly(butylene azelate-co-succinate-co-terephthalate), poly(butylene adipate-co-furanoate) and poly(butylene sebacate-co-furanoate), poly(butylene azelate-co-furanoate) and mixtures thereof; and
   ∘ at least one aliphatic polyester (c2-c) selected from the group consisting of poly(butylene succinate-co-adipate), poly(butylene succinate), poly(butylene seba-cate), poly(butylene succinate-co-sebacate) and mixtures thereof, especially poly(butylene succinate-co-adipate), poly(butylene succinate), poly(butylene succin-ate-co-sebacate) and mixtures thereof.

In addition to the aforementioned components (a), (b) and (c), the polymer blend may comprises one or more further components (d) other than components (a), (b) and (c). These components (d) are typically selected from the group of additives known for polymer blends, in particular for polymer blends based on polyesters and starch. These additives include, but are not limited to the following components (d1), (d2) and (d3):
(d1) one or more fillers as component (d1); and/or
(d2) one or more additives as component (d2) such as stabilizers, nucleating agents, lubricants and release agents, surfactants, wax, antistatic agents, antifogging agents, dyes, pigments, UV absorbers, UV stabilizers, organic acids and mixtures thereof;
(d3) additives other than those mentioned in (d2), such as organic acids and fatty acid esters.

The total amount of component d) may be as high as 70% by weight, particularly up to 60% by weight, especially up to 50% by weight, based on the total weight of the blend.

In an embodiment, the thermoplastic polymer blend optionally comprises from 0 to 50% by weight, if present, e. g. 0 to 50% by weight, particularly from 0.1 to 40% by weight, especially from 0.2 to 35% by weight, based on the total weight of the blend in anhydrous form, of one or more fillers (component (d1)). Suitable fillers include, but are not limited to natural fibers, wood meal and/or an inorganic filler selected from the group consisting of chalk, precipitated calcium carbonate, graphite, gypsum, conductive carbon black, iron oxide, calcium chloride, dolomite, kaolin, silicon dioxide (quartz), sodium carbonate, titanium dioxide, silicate, wollastonite, mica, montmorillonite, talc, glass fibers and mineral fibers and are added.

Natural fibers are understood as meaning, for example cellulose fibers, hemp fibers, sisal, kenaf, jute, flax, abacca, coconut fibers or cordenka fibers.

Glass fibers, carbon fibers, aramid fibers, potassium titanate fibers and natural fibers may be mentioned as preferred fibrous fillers, glass fibers as E-glass being particularly preferred. These can be used as rovings or in particular as cut glass in the commercially available forms. These fibers have in general a diameter of from 3 to 30 µm, preferably from 6 to 20 µm and particularly preferably from 8 to 15 µm. The fiber length in the compound is as a rule from 20 µm to 1000 µm, preferably from 180 to 500 µm and particularly preferably from 200 to 400 µm.

In another embodiment, the thermoplastic polymer blend optionally comprises from 0.1 to 2.5% by weight, particularly 0.3 to 2.3% by weight, especially 0.5 to 2% by weight based on the total weight of the blend in anhydrous form, of at least one component (d2) which is typically selected from the group consisting of stabilizers, nucleating agents, lubricant and release agents, surfactants, wax, antistatic agents, antifogging agents, dyes, pigments, UV absorber, UV stabilizers, other plastics additive typically used in polyester blends.

Suitable nucleating agents include, but are not limited to polybutylene terephthalate, N,N'-ethylenebisstearylamide, zinc phenylphosphonate, graphite, talc, chalk, precipitated calcium carbonate, kaolin, quartz sand or silicate.

Particularly preferably, the thermoplastic polymer blend comprises 0.0 to 1% by weight, in particular 0.05 to 0.5% by weight, especially 0.1 to 0.35% by weight, based on the total weight of the polymer blend in anhydrous form, of at least one lubricant.

Suitable lubricants include, but are not limited to fatty acid amides, such as stearylamide.

Suitable release agents include, but are not limited to stearates (in particular calcium stearate).

Suitable surfactants include, but are not limited to polysorbates, palmitates and laurates.

Suitable waxes include, but are not limited to erucamide, stearamide, behenamide, beeswax or beeswax esters, plant based waxes like e.g., candelilla wax or carnauba wax.

It is of course possible to include any other additive conventionally used for starch blends which are not mentioned so far. These additives are referred to as additives (d3). For example, the blend may comprise one or more additives (d3) selected from organic acids and fatty acid esters, e. g. additives as described in EP0947559 and by Zhang et al., Polm. Adv. Technol. 2018 on pp. 1-11. These additives are generally used at concentrations of 0 to 2% by weight, in particular 0.01 to 2% by weight, based on the total weight of the blend in anhydrous form.

In particular, organic acids may be added to the inventive blends. Suitable examples these acids include but are not limited to hydroxycarboxylic acids, such as malic acid, lactic acid, tartaric acid, citric acid or mixtures thereof. If present, the organic acids are generally used at a concentration of 0 to 0.5% by weight, in particular 0.01 to 0.45% by weight and preferably 0.05 to 0.3% by weight, based on the total weight of the blend in anhydrous form.

The abovementioned fillers and additives (d) can also be fed into the extruder separately from the components (a) to (c) in any order or together with the components (a) to (c).

In one group of embodiments, additives (d3), especially organic acids e.g. malic acid, lactic acid, tartaric acid, citric acid or mixtures thereof may be already incorporated in component (a). The above-mentioned amounts thereof apply also to this group of embodiments, however, based on the total weight of component (a).

In particular, the polymer blend optionally comprises
(d1) from 0 to 50% by weight, if present, e.g. from 0.1 to 50% by weight, particularly from 0.1 to 40% by weight and especially from 0.2 to 35% by weight, based on the total weight of the blend in anhydrous form, of a filler (component (d1));
(d2) from 0 to 2% by weight, if present, e.g. from 0.01 to 2% by weight, particularly from 0.01 to 1% by weight and especially from 0.05 to 0.5% by weight, based on the total weight of the blend in anhydrous form, of the component (d2), which is in particular selected from stabilizers, nucleating agents, lubricants and release agents, surfactants, wax, antistatic agents, antifogging agents, dyes, pigments, UV absorbers, UV stabilizers, and combinations thereof; preferably selected from lubricants; and/or
(d3) from 0 to 0.5% by weight, if present, from 0.01 to 0.5% by weight, in particular from 0.01 to 0.45% by weight and especially from 0.05 to 0.3% by weight, based on the total weight of the blend in anhydrous form, of above mentioned additives (d3), in particular organic acids, preferably selected from the group consisting of malic acid, lactic acid, tartaric acid, citric acid and mixtures thereof.

In a group of embodiments, the component (d1), (d2) and/or (d3) is incorporated into the polymer blend during and/or after producing of the polymer blend.

In another group of embodiments, the components (d1) and/or (d2) are already incorporated in the polyester (c). The above-mentioned amounts of component (d1) and (d2) apply also to this group of embodiments, however, based on the total weight of polyester (c).

The thermoplastic polymer blend of the invention is prepared from the individual components by analogy to known processes as described e. g. in EP 792 309, US 5,883,199, EP 906367A1, US 2011/0177275A1 and EP 2467418A1. For example, all components of the mixture can be mixed in one process step in the mixing apparatuses known to the person skilled in the art, for example kneaders or extruders, at elevated temperatures, for example from 120°C to 300°C.

The inventive polymer blends may be used as dry blends or as compounds.

In particular, the process for preparing a thermoplastic polymer blend, as defined herein, comprises the following steps:
(i) providing at least one component (a) or a combination of a hydrophobically modified starch and one or more plasticizer, which is converted at step (iv) into the thermoplastic, hydrophobically modified starch (a);
(ii) providing at least one thermoplastic native starch (b) or a combination of a native starch and one or more plasticizer, which is converted at step (iv) into the thermoplastic native starch (b);
(iii) providing at least one polyester (c),
(iv) if necessary, providing one or more further components selected from components (d1), (d2) and (d3);
(v) Introducing and mixing of the components provided at steps (i) to (iii) and optionally (iv).

In steps (i) to (iii), components (a) to (c), if necessary (d1), (d2) and/or (d3) are provided.

Preferably, in steps (i) to (ii), thermoplastic starch components (a) and (b) are provided in a form, where they are already thermoplastized.

Also preferably, in steps (i) to (ii), both thermoplastic starch components (a) and (b) may also be provided in a form, where they are not thermoplastized yet, in a combination with one or more plasticizer. Such combination of a not-yet thermoplastized starch and one or more plasticizer is converted at step (v) into thermoplastic starch. Therefore, a combination of a hydrophobically modified starch and one or more plasticizer may be provided in step (i), which is converted at step (v) into the thermoplastic, hydrophobically modified starch (a). Likewise, a combination of a native starch and one or more plasticizer may be provided in step (ii), which is converted at step (v) into the thermoplastic native starch (b).

Suitable examples of plasticizers of said combinations are as described above.

In steps (iii) and (iv), at least one polyester (c) and if necessary, one or more additive and/or filler (d) are provided. Suitable examples of additives and fillers (d1), (d2) and/or (d3) are as described above.

In step (v), the components provided at steps (i) to (iii) and optionally (iv) are provided and mixed in a suitable mixing device. In particular, step (v) is carried out in an extruder, especially in a twin-screw extruder. Preferably, the step (v) is carried out using a single-stage process, as described in US 2022119598 A1. In the single-stage process, the plastification of the starch components and the mixing with the further polymer component or additives take place in one process pass in the same machine or in two machines arranged in series, operations here being mostly carried out in twin-screw extruders.

In principle, the starting materials, i.e. components (a) to (c), if necessary (d) can be added in various ways: In direct addition, all of the starting materials, for example starch, polymer, or optionally further additives and solid plasticizers, form an initial charge in the 1st zone, and/or the liquid plasticizers, e.g. polyols and/or water are then added in the downstream zone (e.g. US 2011/0177275A1).

EP 906367A1 and EP 2467418A1 disclose that the starch is first plastified with plasticizers at temperatures above 140°C. The resultant thermoplastified starch is devolatilized, and the water is thus substantially removed. Only then is the further polymer added, in molten or granular, solid form.

A feature common to all of the processes described in the prior art is that the gelatinization/plastification of the starch takes place shortly after the addition of the plasticizer at temperatures above the gelatinization temperature.

Gelatinization, i.e. digestion of the starch grains, takes place at a temperature which depends primarily on the nature of the starch used, in particular its water content, and also on the quantity and structure of the plasticizer and its water content (see by way of example Tan et al., Carbohydrate Polymers 2004, 58, 191-204; Taghizadeh & Favis, Carbohydrate Polymers 2013, 92, 1799-1808). Within the plasticizer concentration ranges relevant for starch blends, gelatinization of the starch generally begins at above 70 to 100°C. In step (v) of the process of the invention it is therefore preferable to set a resultant extruder temperature below 100°C, preferably below 85°C and with particular preference below 60°C.

A defined wetting section in the extruder is necessary in order to achieve adequate and uniform wetting of the starch by the plasticizer at high throughputs. The wetting section is measured from the point, at which the starch and the plasticizer or a partial quantity of the plasticizer, first encounter one another, to the point, at which the temperature of the extruder is increased beyond the temperature, at which the starch begins to gelatinize (gelatinization temperature). The length of the wetting section in the extruder is generally 8D, (i.e. 8 x the diameter of the screw cylinder), and preferably at least 12D. If operations are carried out with two extruders arranged in series, the first extruder is generally utilized for the wetting of the starch, and its length is usually 8D to 80D and preferably 12D to 60D. The additional residence time of the starch together with the plasticizer leads to products, which comprise only a very small content of agglomerated starch particles, which have not been completely digested. Economic considerations dictate that wetting sections longer than 30D in a single extruder and 60D if two extruders are used are of relatively little interest.

In an embodiment A of the process of the invention, only conveying screw elements are installed in the wetting section of the extruder. In this mode of operation, it is possible that the polyester component (c) is added at any desired point of the wetting section; this point may also be in zone 1 at the ingoing end of the extruder. The component (c) is preferably added in solid form.

Installed in the wetting section of the extruder in a preferred embodiment B there are, alongside conveying screw elements, at least one, preferably two or more, intensive-mixing screw elements, which additionally promote uniform wetting of the starch by the plasticizer and again reduce the number of agglomerated starch particles in the final product. The expression "intensive-mixing screw elements" means by way of example kneading blocks, toothed mixing elements or other shearing elements. In embodiment B, it has proven advantageous to add the polyester (c), preferably in solid form, only downstream of these intensive-mixing screw elements, but upstream of the end of the wetting section of the extruder.

The efficient wetting of the starch by the plasticizer in embodiment B has proven successful in particular in modes of operation with high throughputs above 100 kg/h, in particular above 120 kg/h and with particular preference above 150 kg/h, based in each case on a twin-screw extruder with a screw diameter of 45 mm, and based on the anhydrous final product (starch blend). Throughputs achieved in a twin-screw extruder with 65 mm screw diameter are above 400 kg/h, in particular above 500 kg/h and with particular preference above 600 kg/h - based on the anhydrous final product.

In particular, embodiment B is also suitable for the production of starch blends with very fine dispersion of the starch components in the polymer matrix, or indeed co-continuous structures with a very fine lamellar structure. Surprisingly, good dispersion was even achieved in starch blends having high contents of the starch components above 29%, indeed above 39% and indeed in particular above 44%.

In both embodiments it has been found advantageous to introduce the polyester (c) in solid form (e.g. as granulate) specifically before the thermoplastification of the starch components, i.e. at temperatures below the gelatinization point of the starch/plasticizer mixture, so that the melting of the polyester and the thermoplastification of the starch components take place simultaneously in the subsequent melting zone.

In principle, it is possible to add the polyester (c) at any desired point of the extruder. However, downstream of addition of the polyester (c) there must be an adequate screw length to allow any necessary melting of the polyester (c) (if the polyester (c) is added in solid form), and to ensure mixing with the starch components (thermoplastified or not yet thermoplastified) and dispersion of the thermoplastified starch components into the polymer matrix.

In order to provide any necessary melting of the polyester (c) and to digest, destructure, and thermoplastify the starch components and disperse same in the molten polymer, the internal temperature of the extruder is increased stepwise along the plastifying section up to temperatures above 130 °C. It is preferable that barrel temperatures set in the plastifying section, optionally rising to the discharge die of the extruder, start at 90°C and end at 260°C, preferably ending at 230°C and with particular preference ending at 220°C, and where the temperature of the polymer melt at discharge from the die is kept below 250°C, with preference below 240°C, and with particular preference below 230°C.

The comparatively low-temperature mode of operation has the advantage that during the further course of the extrusion process the mixing and homogenization of the melt takes place in the presence of a considerable quantity of water, generally between 1 and 20% by weight, preferably 3 and 15% by weight, particularly preferably 5 and 10% by weight, based on the entirety of the anhydrous final products. The starch components are thus very substantially protected from any disadvantageous thermal degradation involving discoloration. The high water content present at least at the beginning of the plastifying section then facilitates homogeneous fine-particle dispersion of the starch in the polymer matrix. The water content which is present in the mixture, or preferably melt, and which results from the water introduced by the starch components, or by the plasticizer or plasticizer mixture used, or via separate introduction, is moreover reduced, for example by means of lateral devolatilization, so that said content on discharge from the extruder (at the discharge die) is below 5%, based on the starch blend. In the case of granulation of the starch blend by way of an underwater pelletizer, it is advantageous to set a water content at the discharge die that is below 3%, based on the starch blend. If a strand pelletizer is used, the water content is generally set to below 2% and preferably below 1%, based on the starch blend.

The inventive blends are useful in making a mono-layered or multi-layered film. Therefore, the present invention also relates to a mono-layered or multi-layered film comprising at least one layer made of a blend as defined herein.

The inventive blends can be formed into such mono-layered or multi-layered film using any known process, including thermoplastic processes such as thermoforming, extrusion, coextrusion, film casting, film blowing, lamination, foaming using gases or chemical foaming agents, or any suitable combination thereof to prepare the desired film.

The inventive blends described herein are particularly well suited for the extrusion, coextrusion and blowing of films with high tear strength.

### Working examples

### Starting materials:

A1) ecoflex^{®} F Blend C1200 - aliphatic-aromatic polyester from BASF with MVR of 3 to 5 cm³/10 min at 190 °C / 2.16 kg.
B1) Native corn starch, water content about 12%.
C1) Neosorb 70/70 - sorbitol solution with very low susceptibility to crystallization solids content 70%, sorbitol content at least 50% (from Roquette).
D1) Agrana 8145 - hydrophobically modified thermoplastic starch (TPS), water content 5.7%, as determined by an infrared moisture analyser at 130 °C / 30 min (from Agrana).
E1) Lubricant batch consisting of 90% by weight of ecoflex^{®} F Blend C1200 and 10% by weight of stearylamide from Croda
F1) PHBH^{™} Aonilex 151C - plant-oil-based biodegradable polyester from Kaneka

### Description of extruders used:

ZSK 45 MC¹⁸ corotating twin-screw extruder from Coperion, diameter 45 mm, 15 electrically heatable and water-coolable barrel zones with the length to diameter ratio of L/D = 60 with a wetting section of length 12D, into which four kneading blocks were incorporated. Specific torque 18 Nm/cm³. The polymer melt was granulated with an under water granulator from Gala.

### Description of blown film plants:

Blown film plant consisting of a single-screw extruder with diameter 30 mm and length 25D, spiral mandrel distributor with 80 mm diameter and die gap 0.8 mm. Blow-up ratio is typically 3.5, resulting in a laid-flat film-bubble width of about 440 mm.

### Analysis:

### Determination of water content:

The residual moisture content was determined by the Karl-Fischer Titration Method B2 from EN ISO 15512:2019 using a Mettler-Toledo InMotion KF PRO Oven Autosampler at 130 °C heating temperature.

### Melt volume rate: Melt volume rate was determined in accordance with EN ISO 1133 at the stated temperatures and with the stated weights, and is stated in cm³ / 10 min.

**Average starch particle diameter:** A sample was obtained at -80°C from the film produced in example 2 by microtome section parallel to the extrusion direction. This sample was studied by atomic force microscopy on portions measuring 15 x 15 micrometers. The relatively hard TPS phase can be distinguished very easily from the relatively soft polymer phase and permits precise determination of blend morphology and particle sizes of the starch particles dispersed in the polymer. Evaluation of particle sizes gave an average particle size of 466 nanometers and a maximal particle diameter of only 1488 nanometers; this is evidence of the very fine-particle dispersion of the starch particles in the polymer phase.

**THF determination:** The THF determination was carried out by Headspace GC-MS based on DIN 38407-F 43 2014-10 and LA-GC-013.071 (Headspace GC-MS determination of volatile organic substances in low-fat foods). For this, a suitable quantity of the specimen is dissolved in dimethylacetamide and THF-d8 is added as internal standard. The specimen sealed in the glass Headspace GC bottle is heated at 85°C for 30 min in the Headspace oven in an Agilent HS GC/MS, and then subjected to measurement. Helium is used as carrier gas. The value is externally calibrated on the basis of recovery of the internal standard (THF-d8) and matrix effect control (Matrix Spike).

### Film thickness:

The film thickness was calculated from their known density (1.29 g/cm³ at 30% thermoplastic starch content, 1.31 g/cm³ at 40% thermoplastic starch content) and the weight of an exactly 100 cm² big film piece in analogy to the method described for polyethylene in Annex 3 of ASTM E252- 06.

### Tensile test in machine direction and in transverse direction

The tensile test was obtained from the blown films according to ISO 527-3:2018 under norm conditions (23 °C, 50% relative humidity). For each value 5 specimen type 2 with a width of 15 mm and a length of 150mm were measured. The initial distance between the grips was 50mm. The value for the E-Modulus was obtained at a test speed of 1mm/min. The other parameters were obtained at a test speed of 125 mm/min.

### Tear resistance (Pendulum Elmendorf-Test)

The tear resistance of the films was determined according to EN ISO 6383-2:2004 using a Pro-Tear^{®} Electronic Elmendorf Tear Tester from Thwing-Albert Instrument Company and constant-radius film samples (43 mm tear length) under norm conditions (23 °C, 50% relative humidity).

### Inventive Examples 1 to 5 (IE1 to 5):

Examples 1 to 5 were produced according to the general procedure described in WO2020/156970 using a co-rotating twin screw extruder Coperion ZSK 45 MC¹⁸ with a diameter of 45 mm and 15 x 4D barrels resulting in a total length of L = 60D.

All components were dosed using separate gravimetric feeders or pumps. The native starch B1 was added in powder form into zone 1 of the extruder. A gravimetrically controlled gear pump was used to add the plasticizer(s) C1 into zone 2. The starting material A1 as well as the thermoplastic starch (TPS) D1 and the lubricant E1 were added by way of a side feeder (ZS-B) in pellet form in zone 5 of the extruder. Between the plasticizer-addition point in zone 2 and the polymer-addition point in zone 5 there were not only conveying elements installed but also 4 kneading block as mixing elements. Excess water was removed in zone 11 and 14 via a 40 mm lateral devolatilization unit (ZS EG 40). After the water was removed the granulation of the melt was performed using an underwater pelletizing equipment from Gala. The water content was below 0.5 % in all cases and no subsequent drying was necessary.

Temperature profile [°C]: 30-30-30-30-30-90-120-160-160-160-160-160-160-160-160- 2 x 160 (2 flanges) - 180 (start-up valve) - 180 (die plate).

Screw speed and throughput can be derived from the Tables.

### Comparative Example 1 (CE1):

Comparative example 1 was carried out after the same procedure as Inventive Examples 1 to 5, except for no addition of the hydrophobically modified thermoplastic starch D1.

### Inventive Example 6 (IE6):

Inventive example 1 was carried out after the same procedure as Inventive Examples 1 to 5, except that PHBH F1 was metered together with the lubricant E1 into zone 11.

### Comparative Example 2 (CE2):

Comparative example 2 was carried out after the same procedure as Inventive Example 6, except for no addition of the hydrophobically modified thermoplastic starch D1.

### Comparative Example 3 (CE3):

Comparative example 3 was carried out after the same procedure as Inventive Example 6, except for no addition of the hydrophobically modified thermoplastic starch D1 and by choosing a higher rotation rate in order to increase the shear.

Table 1 summarizes the relevant experimental conditions of IE1 to 5 and CE1 such as rotation rate, the quantities of A1 to E1 added, temperature profile, blow-up ratio and film thickness.

Table 2 summarizes the results of tensile test of IE1 to 5 and CE1.

Table 3 summarizes the relevant experimental conditions of IE6 and CE2 such as rotation rate, the quantities of A1 to F1 added, temperature profile, blow-up ratio and film thickness.

Table 4 summarizes the results of tensile test of IE6 and CE2.

**Table 1**

| | **IE1** | **IE2** | **IE3** | **IE4** | **IE5** | **CE1** |
|---|---|---|---|---|---|---|
| **Extruder** | | | | | | |
| Rotation rate [rpm] | 300 | 300 | 300 | 300 | 300 | 300 |
| Quantity of A1 added [kg/h] | 101.50 | 101.50 | 101.50 | 101.50 | 101.50 | 101.50 |
| Quantity of B1 added [kg/h] | 55.83 | 52.15 | 44.65 | 37.10 | 29.75 | 59.50 |
| Quantity of C1 added [kg/h] | 23.63 | 22.05 | 19.08 | 15.75 | 12.78 | 25.20 |
| Quantity of D1 added [kg/h] | 4.64 | 9.28 | 18.55 | 27.83 | 37.10 | 0 |
| Quantity of E1 added [kg/h] | 3.5 | 3.5 | 3.5 | 3.5 | 3.5 | 3.5 |
| Melt temperature at start-up valve [°C] | 223 | n.d. | n.d. | n.d. | n.d. | 228 |
| Anhydrous D1 content in final product % | 2.5 | 5 | 10 | 15 | 20 | 0 |
| Sum of anhydrous B1 and C1 content in final product % | 37.5 | 35 | 30 | 25 | 20 | 40 |
| Remaining moisture (KF-Titration) % | 0.41 | 0.39 | 0.34 | 0.30 | 0.29 | 0.38 |
| MVR (190 °C, 5 kg) [cm³ / 10 min] | 5.6 | 3.7 | 3.5 | 3.5 | 3.6 | 4.4 |

| **Film extrusion** | | | | | | |
|---|---|---|---|---|---|---|
| Rotation rate [rpm] | 80 | 80 | 80 | 80 | 80 | 80 |

| Temperature profile [°C] | | | | | | |
|---|---|---|---|---|---|---|
| Intake zone | WC | WC | WC | WC | WC | WC |
| Zone 1 | 120 | 120 | 120 | 120 | 120 | 120 |
| Zone 2 | 170 | 170 | 170 | 170 | 170 | 170 |
| Zone 3 | 170 | 170 | 170 | 170 | 170 | 170 |
| Flange | 170 | 170 | 170 | 170 | 170 | 170 |
| Elbow | 170 | 170 | 170 | 170 | 170 | 170 |
| Spiral mandrel distributor | 170 | 170 | 170 | 170 | 170 | 170 |
| Die | 170 | 170 | 170 | 170 | 170 | 170 |
| Blow-up ratio | 1 : 3.5 | 1: 3.5 | 1: 3.5 | 1: 3.5 | 1: 3.5 | 1: 3.5 |
| Film thickness** [µm] | 12.2 | 12.6 | 12.5 | 12.2 | 11.4 | 12.3 |

| | | | | | | |
|---|---|---|---|---|---|---|
| * n.d.: not determined; WC: water-cooling ** From weight per unit area | | | | | | |

**Table 2**

| | **IE1** | **IE2** | **IE3** | **IE4** | **IE5** | **CE1** |
|---|---|---|---|---|---|---|
| **Tensile test in machine direction** | | | | | | |
| Modulus of elasticity [MPa] | 128 | 162 | 159 | 175 | 160 | 144 |
| Tensile stress [MPa] | 28.8 | 26.3 | 26.1 | 29.2 | 26.6 | 23.7 |
| Tensile strain at max. tensile strength % | 433 | 420 | 426 | 428 | 426 | 295 |
| Tear strength [MPa] | 28.0 | 25.4 | 25.2 | 26.2 | 25.9 | 20.7 |
| Tensile strain at break % | 436 | 426 | 431 | 435 | 429 | 304 |

| **Tensile test in transverse direction** | | | | | | |
|---|---|---|---|---|---|---|
| Modulus of elasticity [MPa] | 142 | 179 | 176 | 173 | 178 | 164 |
| Tensile stress [MPa] | 23.6 | 20.6 | 23.1 | 22.4 | 23.2 | 19.9 |
| Tensile strain at max. tensile strength % | 543 | 502 | 507 | 517 | 515 | 452 |
| Tear strength [MPa] | 22.7 | 19.8 | 22.7 | 22.0 | 22.6 | 19.2 |
| Tensile strain at break % | 543 | 502 | 507 | 517 | 515 | 457 |

| **Tear properties** | | | | | | |
|---|---|---|---|---|---|---|
| Tear propagation resistance in machine direction [mN] | 1256 | 1295 | 1781 | 1924 | 2055 | 1069 |
| Tear propagation resistance in transverse direction [mN] | 3530 | 3883 | 4817 | 4601 | 4478 | 3364 |

| | | | | | | |
|---|---|---|---|---|---|---|
| * n.d.: not determined | | | | | | |

**Table 3**

| | **IE6** | **CE2** | **CE3** |
|---|---|---|---|
| **Extruder** | | | |
| Rotation rate [rpm] | 300 | 300 | 350 |
| Quantity of A1 added [kg/h] | 89.25 | 89.25 | 89.25 |
| Quantity of B1 added [kg/h] | 44.65 | 59.5 | 59.5 |
| Quantity of C1 added [kg/h] | 19.075 | 25.2 | 25.2 |
| Quantity of D1 added [kg/h] | 18.55 | 0 | 0 |
| Quantity of E1 added [kg/h] | 3.5 | 3.5 | 3.5 |
| Quantity of F1 added [kg/h] | 12.25 | 12.25 | 12.25 |
| Melt temperature at start-up valve [°C] | 223 | 214 | 221 |
| Anhydrous D1 content in final product % | 10 | 0 | 0 |
| Sum of anhydrous B1 and C1 content in final product % | 30 | 40 | 40 |
| Remaining moisture (KF-Titration) % | 0.38 | 0.44 | 0.36 |
| MVR (190 °C, 5 kg) [cm³ / 10 min] | 4.5 | 4.1 | 4.0 |

| **Film extrusion** | | | |
|---|---|---|---|
| Rotation rate [rpm] | 80 | 80 | 80 |

| Temperature profile [°C] | | | |
|---|---|---|---|
| Intake zone | WC | WC | WC |
| Zone 1 | 120 | 120 | 120 |
| Zone 2 | 170 | 170 | 170 |
| Zone 3 | 170 | 170 | 170 |
| Flange | 170 | 170 | 170 |
| Elbow | 170 | 170 | 170 |
| Spiral mandrel distributor | 170 | 170 | 170 |
| Die | 170 | 170 | 170 |
| Blow-up ratio | 1 : 3.5 | 1 : 3.5 | 1 : 3.5 |
| Film thickness** [µm] | 11.5 | n.d. | n.d. |
| Observation | Very smooth film; Well processable. | Not able to blow; The film tore already at the die; Very coarse structure was visible. | Not able to blow; The film tore already at the die; Coarse structure was visible. |

| | | | |
|---|---|---|---|
| * n.d.: not determined; WC: water-cooling ** From weight per unit area | | | |

**Table 4**

| | **IE6** | **CE2 & CE3** |
|---|---|---|
| **Tensile test in machine direction** | | |
| Modulus of elasticity [MPa] | 220 | n.d. |
| Tensile strength [MPa] | 22.6 | No film was produced |
| Elongation at max. tensile strength % | 305 | |
| Tear strength [MPa] | 21.7 | |
| Elongation at break % | 309 | |

| **Tensile test in transverse direction** | | |
|---|---|---|
| Modulus of elasticity [MPa] | 229 | n.d. |
| Tensile strength [MPa] | 20.0 | No film was produced |

| | **IE6** | **CE2 & CE3** |
|---|---|---|
| Elongation at max. tensile strength % | 418 | |
| Tear strength [MPa] | 19.1 | |
| Elongation at break % | 424 | |
| **Tear properties** | | |
| Tear propagation resistance in machine direction [mN] | 1162 | |
| Tear propagation resistance in transverse direction [mN] | 4164 | |

| | | |
|---|---|---|
| * n.d.: not determined | | |

Tables 1 to 4 exhibit that the films comprising the inventive thermoplastic polymer blend comprising a hydrophobically modified TSP (IE1 to IE6) possess improved properties compared to the comparative films that do not comprise the blend according to the invention (CE1 to CE3). For example, the inventive films of IE1 to IE6 comprising a hydrophobically modified TSP have increased tensile stress, tensile strains, tear strength and tear propagation resistance as well as increased elongation at break or max. tensile strength (cf. tables 2 and 4) in comparison to the comparative films of CE1 to CE3 that do not comprise a hydrophobically modified TSP. Moreover, in most cases the films of the invention have improved modulus of elasticity.

## Claims

1. Thermoplastic polymer blend comprising
(a) at least one thermoplastic, hydrophobically modified starch as component (a),
(b) at least one thermoplastic native starch as component (b), and
(c) at least one thermoplastic polyester as component (c), which selected from the group consisting of aliphatic polyesters, aliphatic-aromatic polyesters and mixtures thereof.

2. The blend according to claim 1, comprising the components (a) and (b) in the following relative amounts, based on the total weight of components (a) and (b), where the amounts of the components (a) and (b) are calculated in their anhydrous form:
(a) 1 to 70% by weight, preferably 5 to 60% by weight, especially 6 to 58% by weight, of the component (a) and
(b) 30 to 99% by weight, preferably 40 to 95% by weight, especially 42 to 94% by weight of the component (b).

3. The blend according to any one of claims 1 or 2, comprising the component (a) in an amount of 0.1 to 35% by weight, based on the total weight of the blend in anhydrous form, where the amount of (a) is calculated as the anhydrous form of component (a).

4. The blend according to any one of the preceding claims, wherein component (a) is selected from the group consisting of
- thermoplastic starches hydrophobically modified with epoxides of the group of arylglycidyl ethers, alkyl substituted arylglycidyl ethers, arylglycidyl esters, alkyl substituted arylglycidyl esters, alkylglycidyl ethers and alkylglycidyl esters, and combinations thereof,
- thermoplastic starches hydrophobically modified with epoxidized vegetable oils
- thermoplastic starches hydrophobically modified with fatty acids or ester forming derivatives thereof,
- thermoplastic starches hydrophobically modified with silanes,
- thermoplastic starches hydrophobically modified with alkyl-substituted anhydrides of dicarboxylic acids,
- thermoplastic starches hydrophobically modified with isocyanates,
and mixtures thereof.

5. The blend according to claim 4, wherein component (a) is selected from the group consisting of thermoplastic starches hydrophobically modified with epoxidized vegetable oils and mixtures thereof.

6. The blend according to any one of the preceding claims, wherein component (a) comprises one or more plasticizer selected from polyols.

7. The blend according to any one of the preceding claims, comprising
- 5 to 70% by weight, in particular 7 to 65% by weight, especially 15 to 60% by weight, based on the total weight of blend in anhydrous form, of a combination of at least one thermoplastic, hydrophobically modified starch (a) and at least one native starch (b), where the amounts of the components (a) and (b) are calculated in their anhydrous form;
- 30 to 95% by weight, in particular 5 to 93% by weight, especially 40 to 85% by weight, based on the total weight of blend in anhydrous form, of at least one polyester (c).

8. The blend according to any one of the preceding claims, comprising
- 2 to 30% by weight, in particular 3 to 28% by weight, especially 5 to 25% by weight, based on the total weight of blend in anhydrous form, of at least one thermoplastic, hydrophobically modified starch (a);
- 5 to 63%by weight, in particular 7 to 62% by weight, especially 10 to 55% by weight, based on the total weight of blend in anhydrous form, of at least one thermoplastic native starch (b);
- 35 to 93% by weight, in particular 35 to 90% by weight, especially 40 to 85% by weight, based on the total weight of blend in anhydrous form, of at least one polyester (c);

9. The blend according to any of the preceding claims, where the component (c) is biodegradable.

10. The blend according to any one of the preceding claims, wherein component (c) comprises a combination of at least one aliphatic-aromatic polyester (c1) and at least one aliphatic polyester (c2).

11. The blend according to claim 10, wherein aliphatic polyester (c2) is selected from the group consisting of polyhydroxyalkanoates and polylactic acids, and mixtures thereof, preferably from the group consisting of polyhydroxyalkanoates.

12. The blend according to any one of the preceding claims, wherein component (c) comprises an aliphatic-aromatic polyester (c1) selected from the group of aliphatic-aromatic polyesters comprising:
c1-i) from 25 to 70 mol%, preferably from 35 to 65 mol% and especially from 40 to 60 mol%, based on the total of the molar percentages of repeating units c1-i and c1-ii, of repeating units c1-i of at least one aliphatic C₄-C₁₈-dicarboxylic acid;
c1-ii) from 30 to 75 mol%, preferably from 35 to 65 mol% and especially from 40 to 60 mol%, based on the total of the molar percentages of repeating units c1-i and c1-ii, of repeating units c1-ii of terephthalic acid; and
c1-iii) from 98 to 102 mol%, 98 to 100 mol%, preferably 99 to 100 mol%, especially 100 mol%, based on the total of the molar percentages of repeating units c1-i and c1-ii, of repeating units c1-iii of at least one C₂-C₆-alkandiol, in particular of 1,3-propanediol and/or 1,4-butanediol.
and
aliphatic-aromatic polyesters comprising:
c2-i) from 20 to 60 mol%, preferably from 20 to 50 mol% and especially from 20 to 40 mol%, based on the total of the molar percentages of repeating units c1-i and c1-ii', of repeating units c1-i of at least one aliphatic C₄-C₁₈-dicarboxylic acid;
c2-ii) from 40 to 80 mol%, preferably from 50 to 80 mol% and especially from 60 to 80 mol%, based on the total of the molar percentages of repeating units c1-i and c1-ii', of repeating units c1-ii' of furandicarboxylic acid; and
c2-iii) from 98 to 100 102 mol%, preferably from 99 to 100mol%, especially 100 mol%, based on the total of the molar percentages of repeating units c1-i and c1-ii', of repeating units c1-iii of at least one C₂-C₆-alkandiol, in particular of 1,3-propanediol and/or 1,4-butanediol.

13. The blend according to any one of the preceding claims, wherein the component (c) comprises an aliphatic-aromatic polyester (c1) which is selected from the group consisting of poly(butylene adipate-co-terephthalate), poly(butylene azelate-co-terephthalate), poly(butylene sebacate-co-terephthalate), poly(butylene sebacate-co-adipate-co-terephthalate), poly(butylene sebacate-co-succinate-co-terephthalate), poly(butylene azelate-co-adipate-co-terephthalate), poly(butylene azelate-co-succinate-co-terephthalate), poly(butylene adipate-co-furanoate) and poly(butylene sebacate-co-furanoate), poly(butylene azelate-co-furanoate) and mixtures thereof.

14. A process for preparing a thermoplastic blend according to any one of the preceding claims, comprising the steps:
(i) Providing at least one component (a) or a combination of a hydrophobically modified starch and one or more plasticizer, which is converted at step (iv) into the thermoplastic, hydrophobically modified starch (a);
(ii) Providing at least one thermoplastic native starch (b) or a combination of a native starch and one or more plasticizer, which is converted at step (iv) into the thermoplastic native starch (b);
(iii) providing at least one polyester (c);
(iv) if necessary, providing one or more further components other than components (a), (b) and (c);
(v) Introducing and mixing of the components provided at steps (i) to (iii) and optionally (iv).

15. The process according to claim 14, wherein step (v) is carried out in an extruder.

16. A mono-layered or multi-layered film comprising at least one layer made of a blend according to any one of claims 1 to 13.

## Patentansprüche

1. Thermoplastische Polymermischung, umfassend
(a) mindestens eine thermoplastische, hydrophob modifizierte Stärke als Bestandteil (a),
(b) mindestens eine thermoplastische native Stärke als Bestandteil (b) und
(c) mindestens ein thermoplastisches Polyester als Komponente (c), das aus der Gruppe ausgewählt wurde, die aus aliphatischen Polyestern, aliphatischaromatischen Polyestern und deren Mischungen besteht.

2. Die Mischung gemäß Anspruch 1 umfassend die folgenden Komponenten (a) und (b) in den nachfolgenden relative Mengen, basierend auf dem Gesamtgewicht der Komponenten (a) und (b), wobei die Mengen der Komponenten (a) und (b) in ihrer wasserfreien Form berechnet werden:
(a) 1 bis 70 % nach Gewicht, vorzugsweise 5 bis 60 % nach Gewicht, insbesondere 6 bis 58 % nach Gewicht, der Komponente (a) und
(b) 30 bis 99 % nach Gewicht, vorzugsweise 40 bis 95 % nach Gewicht, besonders 42 bis 94 % nach Gewicht der Komponente (b).

3. Die Mischung gemäß einem der Ansprüche 1 oder 2 umfassend die Komponente (a) in einer Menge von 0,1 bis 35 % nach Gewicht, basierend auf dem Gesamtgewicht der Mischung in wasserfreier Form, wobei die Menge von (a) als wasserfreie Form der Komponente (a) berechnet wird.

4. Die Mischung gemäß einer der vorangegangenen Ansprüche, wobei die Komponente (a) aus der Gruppe ausgewählt wird bestehend aus
- mit Epoxiden der Gruppe der Arylglycidylether, alkylierte Arylglycidylether, Arylglycidylester, Alkylsubstitutierte Arylglycidylester, Alkylglycidylether und Alkylglycidylester sowie deren Kombinationen hydrophob modifizierten thermoplastischen Stärken,
- mit epoxidierten Pflanzenölen hydrophob modifizierten thermoplastischen Stärken,
- mit Fettsäuren oder Ester formende Derivate hydrophob modifizierten thermoplastischen Stärken,
- mit Silanen hydrophob modifizierten thermoplastischen Stärken,
- mit alkyl-substituierten Anhydriden von Dicarbonsäuren hydrophob modifizierten thermoplastischen Stärken,
- mit Isocyanaten und deren Mischungen hydrophob modifizierten thermoplastischen Stärken.

5. Die Mischung nach Anspruch 4, wobei die Komponente (a) aus der Gruppe bestehend aus mit epoxidierten Pflanzenölen hydrophob modifizierten thermoplastischen Stärken und deren Mischungen ausgewählt wird.

6. Die Mischung gemäß einem der vorangegangenen Ansprüche, wobei Komponente (a) einen oder mehrere aus Polyolen ausgewählte Weichmacher umfasst.

7. Die Mischung gemäß einer der vorangegangenen Ansprüche umfassend 5 bis 70 % nach Gewicht, besonders 7 bis 65 % nach Gewicht, insbesondere 15 bis 60 % nach Gewicht, basierend auf dem Gesamtgewicht der Mischung in wasserfreier Form, einer Kombination aus mindestens einer thermoplastischen, hydrophob modifizierten Stärke (a) und mindestens einer natürlichen Stärke (b), wobei die Mengen der Bestandteile (a) und (b) in ihrer wasserfreien Form berechnet werden;
30 bis 95 % nach Gewicht, besonders 5 bis 93 % nach Gewicht, insbesondere 40 bis 85 % nach Gewicht, basierend auf dem Gesamtgewicht der Mischung in wasserfreier Form von mindestens einem Polyester (c).

8. Die Mischung gemäß einer der vorangegangenen Ansprüche umfassend 2 bis 30 % nach Gewicht, besonders 3 bis 28 % nach Gewicht, insbesondere 5 bis 25 % nach Gewicht, basierend auf dem Gesamtgewicht der Mischung in wasserfreier Form, mindestens einer thermoplastischen, hydrophob modifizierten Stärke (a);
5 bis 63 % nach Gewicht, besonders 7 bis 62 % nach Gewicht, insbesondere 10 bis 55 % nach Gewicht, basierend auf dem Gesamtgewicht der Mischung in wasserfreier Form von mindestens einer thermoplastischen nativer Stärke (b);
35 bis 93 % nach Gewicht, besonders 35 bis 90 % nach Gewicht, insbesondere 40 bis 85 % nach Gewicht, basierend auf dem Gesamtgewicht der Mischung in wasserfreier Form von mindestens einem Polyeter (c);

9. Die Mischung gemäß einer der vorangegangenen Behauptungen, wobei die Komponente (c) biologisch abbaubar ist.

10. Die Mischung gemäß einer der vorangegangenen Ansprüche, wobei Komponente (c) eine Kombination aus mindestens einem aliphatisch-aromatischen Polyester (c1) und mindestens einem aliphatischen Polyester (c2).

11. Die Mischung gemäß Anspruch 10, wobei aliphatisches Polyester (c2) aus der Gruppe bestehend aus Polyhydroxyalkanoaten und Polymilchsäuren sowie deren Mischungen ausgewählt wird, vorzugsweise aus der Gruppe bestehend aus Polyhydroxyalkanoaten.

12. Die Mischung gemäß einer der vorangegangenen Ansprüche, wobei Komponente (c) ein aliphatisch-aromatischen Polyester (c1) enthält, der aus der Gruppe von aliphatisch-aromatischen Polyestern ausgewählt ist umfassend:
c1-i) von 25 bis 70 mol%, vorzugsweise von 35 bis 65 mol% und besonders von 40 bis 60 mol%, basierend auf der Summe der molaren Prozentsätze der sich wiederholenden Einheiten c1-i und c1-ii der sich wiederholenden Einheiten c1-i von mindestens einer aliphatischer C₄-C₁₈-Dicarbonsäure;
c1-ii) von 30 bis 75 mol%, vorzugsweise von 35 bis 65 mol% und besonders von 40 bis 60 mol%, basierend auf der Summe der molaren Prozentsätze der sich wiederholenden Einheiten c1-i und c1-ii der wiederholenden Einheiten c1-ii der Terephthalsäure; und
c1-iii) von 98 bis 102 mol%, 98 bis 100 mol%, vorzugsweise 99 bis 100 mol%, insbesondere 100 mol%, basierend auf der Summe der molaren Prozentsätze der sich wiederholenden Einheiten c1-i und c1-ii, der wiederholenden Einheiten
c1-iii von mindestens einem C₂-C₅-Alkandiol, insbesondere von 1,3-Propandiol und/oder 1,4-Butandiol.
und
aliphatisch-aromatische Polyester, bestehend daraus:
c2-i) von 20 bis 60 mol%, vorzugsweise von 20 bis 50 mol% und insbesondere von 20 bis 40 mol%, basierend auf der Summe der molaren Prozentsätze der sich wiederholenden Einheiten c1-i und c1-ii', der sich wiederholenden Einheiten c1-i von mindestens einer aliphatischen C₄-C₁₈-Dicarboxylsäure;
c2-ii) von 40 bis 80 mol%, vorzugsweise von 50 bis 80 mol% und besonders von 60 bis 80 mol%, basierend auf der Summe der molaren Prozentsätze der sich wiederholenden Einheiten c1-i und c1- ii', von sich wiederholenden Einheiten c1-ii' von Furandicarbonsäure; und
c2-iii) von 98 bis 100 102 mol%, vorzugsweise von 99 bis 100 mol %, insbesondere 100 mol%, basierend auf der Summe der molaren Prozentsätze der sich wiederholenden Einheiten c1-i und c1-ii', der wiederholenden Einheiten c1-iii von mindestens einem C₂-C₅-Alkandiol, insbesondere von 1,3-Propandiol und/oder 1,4-Butandiol.

13. Die Mischung gemäß einem der vorangegangenen Ansprüche, wobei die Komponente (c) einen aliphatisch-aromatischen Polyester (c1) enthält, der aus der Gruppe bestehend aus Poly(butylenadipat-co-terephthalat), Poly(butylen-azelat-co-terephthalat), Poly(butylen-sebacat-co-terephthalat), Poly(butylen-sebacat-co-adipat-co-terephthalat), Poly(butylen-sebacat-co-succinat-co-terephthalat), Poly(butylen-azelat-co-adipat-co-terephthalat), Poly(butylen-azelat-co-succinat-co-terephthalat), Poly(butylen-adipat-co-furanoat) und Poly(butylen-sebacat-co-furanoat), Poly (butylen-azelat-co-furanoat) und Mischungen davon ausgewählt ist.

14. Ein Verfahren zur Herstellung einer thermoplastischen Mischung gemäß einem der vorangegangenen Ansprüche umfassend die folgenden Schritte:
(i) Bereitstellen mindestens einer Komponente (a) oder einer Kombination aus hydrophob modifizierter Stärke und einem oder mehreren Weichmachern, die in Schritt (iv) in die thermoplastische, hydrophob modifizierte Stärke (a) umgewandelt wird;
(ii) Bereitstellen mindestens einer thermoplastischen nativen Stärke (b) oder einer Kombination aus einer nativen Stärke und einem oder mehreren Weichmachern, die in Schritt (iv) in die thermoplastische native Stärke (b) umgewandelt wird:
(iii) Bereitstellen von mindestens einem Polyester (c);
(iv) Falls notwendig Bereitstellen einer oder mehrerer weiterer Komponenten außer den Komponenten (a), (b) und (c);
(v) Einführen und Mischen der in den Schritten (i) bis (iii) und möglicherweise (iv) bereitgestellten Komponenten.

15. Das Verfahren gemäß Anspruch 14, bei dem Schritt (v) in einem Extruder durchgeführt wird.

16. Ein einschichtiger oder mehrschichtiger Film enthaltend mindestens eine Schicht hergestellt aus einer Mischung gemäß einem der Ansprüche 1 bis 13.

## Revendications

1. Mélange de polymères thermoplastiques comprenant
(a) au moins un amidon thermoplastique, modifié hydrophobement, comme composant (a),
(b) au moins un amidon thermoplastique natif comme composant (b), et
(c) au moins un polyester thermoplastique comme composant (C), qui a sélectionné parmi le groupe composé de polyesters aliphatiques, de polyesters aliphatiques-aromatiques et de leurs mélanges.

2. Le mélange selon l'affirmation 1, comprenant les composants (a) et (b) dans les quantités relatives suivantes, basées sur le poids total des composants (a) et (b), où les quantités des composants (a) et (b) sont calculées sous leur forme anhydre :
(a) 1 à 70 % en poids, de préférence 5 à 60 % en poids, en particulier 6 à 58 % en poids, de la composante (a) et
(b) 30 à 99 % en poids, de préférence 40 à 95 % en poids, en particulier 42 à 94 % en poids du composant (b).

3. Le mélange selon l'une des revendications 1 ou 2, comprenant le composant (a) dans une proportion de 0,1 à 35 % en poids, basée sur le poids total du mélange sous forme anhydre, où la quantité de (a) est calculée comme la forme anhydre du composant (a).

4. Le mélange selon l'une des affirmations précédentes, dans lequel la composante (a) est sélectionnée parmi le groupe composé de
- Les amidons thermoplastiques modifiés hydrophobement avec des époxydes du groupe des éthers arylglycidyliques, des éthers arylglycidyliques substitués par l'alkyle, des esters arylglycidyliques substitués par l'alkyle, des éthers alkylglycidyliques et des esters alkylglycidyliques, et leurs combinaisons,
- Amidons thermoplastiques modifiés hydrophobement avec des huiles végétales époxydées
- les amidons thermoplastiques modifiés hydrophobement avec des acides gras ou des dérivés formant des esters,
- amidons thermoplastiques modifiés hydrophobement avec des silanes,
- féculents thermoplastiques modifiés hydrophobement par des anhydrides substitués par l'alkyle d'acides dicarboxyliques,
- amidons thermoplastiques modifiés hydrophobement avec des isocyanates,
et des mélanges de ceux-ci.

5. Le mélange selon la revendication 4, dans lequel le composant (a) est sélectionné dans le groupe constitué d'amidons thermoplastiques modifiés hydrophobement avec des huiles végétales époxysées et leurs mélanges.

6. Le mélange selon l'une des affirmations précédentes, dans lequel le composant (a) comprend un ou plusieurs plastifiants sélectionnés parmi les polyols.

7. Le mélange selon l'une des revendications précédentes, comprenant
- 5 à 70 % en poids, en particulier 7 à 65 % en poids, en particulier 15 à 60 % en poids, selon le poids total du mélange sous forme anhydre, d'une combinaison d'au moins un amidon thermoplastique modifié hydrophobe (a) et d'au moins un amidon natif (b), où les quantités des composants (a) et (b) sont calculées sous leur forme anhydre ;
- 30 à 95 % en poids, en particulier 5 à 93 % en poids, en particulier 40 à 85 % en poids, selon le poids total du mélange sous forme anhydre, d'au moins un polyester (c).

8. Le mélange selon l'une des revendications précédentes, comprenant
- 2 à 30 % en poids, en particulier 3 à 28 % en poids, surtout 5 à 25 % en poids, selon le poids total du mélange sous forme anhydre, d'au moins un amidon thermoplastique modifié hydrophobe ;
- 5 à 63 % en poids, en particulier 7 à 62 % en poids, en particulier 10 à 55 % en poids, selon le poids total du mélange sous forme anhydre, d'au moins un amidon thermoplastique natif (b) ;
- 35 à 93 % en poids, en particulier 35 à 90 % en poids, surtout 40 à 85 % en poids, selon le poids total du mélange sous forme anhydre, d'au moins un polyester (c) ;

9. Le mélange selon l'une des affirmations précédentes, où le composant (c) est biodégradable.

10. Le mélange selon l'une des revendications précédentes, dans lequel le composant (c) comprend une combinaison d'au moins un polyester aliphatique-aromatique (c1) et d'au moins un polyester aliphatique (c2).

11. Le mélange selon la revendication 10, dans lequel le polyester aliphatique (c2) est sélectionné parmi le groupe composé de polyhydroxyalcanoates et d'acides polylactiques, ainsi que de leurs mélanges, de préférence issus du groupe composé de polyhydroxyalcanoates.

12. Le mélange selon l'une des revendications précédentes, dans lequel le composant (c) comprend un polyester aliphatique-aromatique (c1) sélectionné parmi le groupe de
polyesters aliphatiques-aromatiques comprenant :
c1-i) de 25 à 70 mol %, de préférence entre 35 et 65 % et surtout de 40 à 60 mol %, basé sur le total des pourcentages molaires des unités répétées C1-I et C1-II, des unités répétées C1-I d'au moins un acide aliphatique C4-C18-dicarboxylique ;
c1-ii) de 30 à 75 mol %, de préférence entre 35 et 65 % et surtout de 40 à 60 mol %, basé sur le total des pourcentages molaires des unités répétitives C1-I et C1-II, des unités répétées C1-II de l'acide térephtalique ; et
c1-iii) de 98 à 102 mol %, 98 à 100 mol %, de préférence 99 à 100 mol %, en particulier 100 mol %, basé sur le total des pourcentages molaires des unités répétitives C1-I et C1-II, des unités répétitives C1-III d'au moins un C2-C6-alkandiol, en particulier du 1,3-propanediol et/ou du 1,4-butanediol.
et
polyesters aliphatiques-aromatiques comprenant :
c2-i) de 20 à 60 mol %, de préférence entre 20 et 50 mol % et surtout de 20 à 40 mol %, basé sur le total des pourcentages molaires des unités répétitives C1-I et C1-II', des unités répétées C1-I d'au moins un acide dicarboxylique aliphatique C4-C18 ;
c2-ii) de 40 à 80 mol %, de préférence de 50 à 80 % et surtout de 60 à 80 mol %, basé sur le total des pourcentages molaires des unités répétitives C1-I et C1-II', des unités répétées C1-Il' d'acide furandicarboxylique ; et
c2-iii) de 98 à 100 102 mol, de préférence de 99 à 100 mol, en particulier 100 %, basé sur le total des pourcentages molaires des unités répétitives C1-I et C1-II', des unités répétitives C1-III d'au moins un C2-C6-alkandiol, en particulier du 1,3-propanediol et/ou du 1,4-butanediol.

13. Le mélange selon l'une des revendications précédentes, dans lequel le composant (c) comprend un polyester aliphatique-aromatique (c1) sélectionné parmi le groupe composé de poly(butylène adipate-co-térephtalate), poly(butylène azelate-co-térephtalate), poly(butylène sébacate-co-térephtalate), poly(butylène sébacate-co-térephtalate), poly(butylène sébacate-co-adipate-co-térephtalate), poly(butylène sébacate-co-succinate-co-térephtalate), poly(butylène azelate-co-adipate-co-térephtalate), poly(butylène azélé-co-succinate-co-térephtalate), poly(butylène adipate-co-furanoate) et poly(butylène sébacate-co-furanoate), poly(butylène azelate-co-furanoate) et des mélanges de ceux-ci.

14. Un procédé de préparation d'un mélange thermoplastique selon l'une des affirmations précédentes, comprenant les étapes suivantes :
(i) Fournir au moins un composant (a) ou une combinaison d'un amidon modifié hydrophobe et d'un ou plusieurs plastifiants, qui est converti à l'étape (iv) en amidon thermoplastique modifié hydrophobement ;
(ii) Fournir au moins un amidon thermoplastique natif (b) ou une combinaison d'un amidon natif et d'un ou plusieurs plastifiants, qui est converti à l'étape (iv) en amidon thermoplastique natif (b) ;
(iii) fournir au moins un polyester (c) ;
(iv) si nécessaire, fournir un ou plusieurs composants supplémentaires autres que les composants (a), (b) et (c) ;
(v) Introduction et mélange des composants fournis aux étapes (i) à (iii) et optionnel-lement (iv).

15. Le procédé selon la revendication 14, où l'étape (v) est réalisée dans un extrudeur.

16. Un film monocouche ou multicouche composé d'au moins une couche composée d'un mélange selon l'une des revendications 1 à 13.
